(19) Europäisches Patentamt
European Patent Office
Office européen des brevets

(11) **EP 4 528 234 A1**

(12) **EUROPEAN PATENT APPLICATION**
published in accordance with Art. 153(4) EPC

(43) Date of publication:
26.03.2025 Bulletin 2025/13

(21) Application number: 23846059.6

(22) Date of filing: 16.06.2023

(51) International Patent Classification (IPC):
*G01F 23/263* (2022.01)

(52) Cooperative Patent Classification (CPC):
G01F 23/263

(86) International application number:
PCT/JP2023/022431

(87) International publication number:
WO 2024/024325 (01.02.2024 Gazette 2024/05)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.07.2022 JP 2022120365

(71) Applicant: **Japan Aviation Electronics Industry,
Limited
Tokyo 150-0043 (JP)**

(72) Inventors:
• ICHIKAWA, Shintaro
Tokyo 150-0043 (JP)
• YAMANE, Kohei
Tokyo 150-0043 (JP)

(74) Representative: **MERH-IP Matias Erny Reichl
Hoffmann
Patentanwälte PartG mbB
Paul-Heyse-Straße 29
80336 München (DE)**

(54) **LIQUID LEVEL GAUGE AND SENSOR FOR IDENTIFYING POSITION OF INTERFACE**

(57) A level gauge comprises a grounded conductor 40 extending in a liquid level detection direction, a sensor part 30 including a plurality of electrodes 31 arranged in the liquid level detection direction and forming capacitance between the plurality of electrode 31 and the grounded conductor 40, an adjustment part 70, switching means 80, discrimination means 90, and liquid level determination means 100, the electrodes 31 are divided into n groups, the i-th group (i = 1, 2, ..., n) is constituted with an electrode at the $2^{i-1}(2k-1)$-th (k is a natural number from 1 to $2^{n-i}$) position from a lowermost position in the liquid level detection direction, the electrodes 31 belonging to the same group are connected in parallel to each other and connected to the switching means 80, the discrimination means 100 discriminates a larger and smaller relationship between capacitance of the i-th group and a total capacitance of a combination of groups from the (i+1)-th group to the n-th group for each of i=1, 2, ..., n-1, and further discriminates a larger and smaller relationship between capacitance of the n-th group and capacitance of the adjustment part 70, the switching means 80 sequentially switches connection between the groups and the discrimination means 90 so as to enable discrimination, and a liquid level is determined based on the discrimination by the discrimination means 90.

FIG. 2

**Description**

[TECHNICAL FIELD]

The present disclosure relates to a sensor (hereinafter, referred to as an interface sensor) for locating a position of an interface between two types of substances, and a level gauge including the interface sensor.

[BACKGROUND ART]

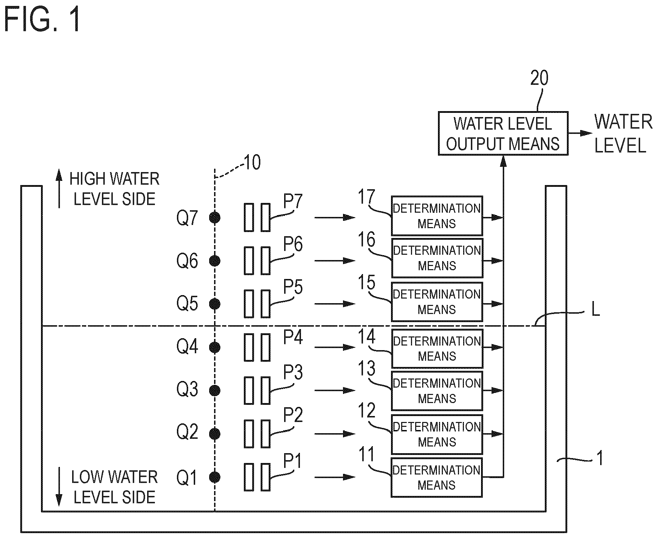

FIG. 1 is a duplication of FIG. 1 of Patent Literature 1 and shows a principle diagram of a water level sensor of prior art. The water level sensor of the prior art measures a water level from a predetermined reference position in a tank 1 (for example, the bottom surface of the tank) to a liquid level L. A reference line 10 is a virtual line, and Z points $Q_z$ (z=1, 2, ..., Z) for observation are set in advance on the reference line 10. In the example illustrated in FIG. 1, Z=7, and seven observation points $Q_1$ to $Q_7$ are shown.

Pairs $P_1$ to $P_7$ of electrodes are arranged one-to-one at respective levels of the observation points $Q_1$ to $Q_7$. Determination means 11 to 17 are connected one-to-one with the respective pairs $P_1$ to $P_7$ of electrodes. Each of the determination means 11 to 17 has a function of determining whether a capacitance value of a corresponding one among the pairs $P_1$ to $P_7$ of electrodes exceeds a predetermined reference value. For example, when the determination means 13 determines that the capacitance value of the pair $P_3$ of electrodes placed at the level of the observation point $Q_3$ exceeds a predetermined reference value, liquid is present at the level of the observation point $Q_3$, and when the determination means 13 determines that the capacitance value of the pair $P_3$ of electrodes placed at the level of observation point $Q_3$ does not exceed the predetermined reference value, no liquid is present at the level of the observation point $Q_3$.

When i determination means from the first to i-th (i ∈ {1, 2, ..., Z}) among Z determination means each output a determination result indicating that a reference value is exceeded, a water level output means 20 outputs information indicating the level of the i-th observation point. In the example illustrated in FIG. 1, the determination means 11 to 14, which correspond to the respective pairs $P_1$ to $P_4$ of electrodes and are below the liquid level L (that is, immersed in the liquid), each output a determination result indicating that the reference value is exceeded, and the determination means 15 to 17, which correspond to the respective pairs $P_5$ to $P_7$ of electrodes and are above the liquid level L (that is, not immersed in the liquid), each output a determination result indicating that the reference value is not exceeded. Therefore, the water level output means 20 outputs information indicating the level of the fourth observation point $Q_4$.

[PRIOR ART LITERATURE]

[PATENT LITERATURE]

Patent literature 1: Japanese Patent Application Laid-Open No. H11-311562

[SUMMARY OF THE INVENTION]

[PROBLEMS TO BE SOLVED BY THE INVENTION]

The water level sensor of the prior art described above locates a water level by determining the presence or absence of liquid at each of levels of two or more observation points, which are set in a direction in which a water level changes (hereinafter, referred to as the level change direction), on the basis of a capacitance value of each of two or more pairs of electrodes which are arranged one-to-one at the levels of the two or more observation points. The water level sensor of the prior art described above locates a water level approximately by discrete values. Thus, according to the water level sensor of the prior art described above, a large number of pairs of electrodes are required to locate a water level with high resolution, and as a result, a large number of conducting lines are also required to correspond to the large number of pairs of electrodes.

For example, when Z observation points are set in the level change direction to locate a water level with high resolution, the water level sensor of the prior art described above requires not only Z pairs of electrodes but also Z+1 conducting lines. This is because electrodes on one side of the Z pairs of electrodes are connected to one common conducting line, and electrodes on the other sides of the Z pairs of electrodes are connected one-to-one to Z conducting lines that differ from each other.

In view of the background art described above, an interface sensor having a configuration that allows a total number L of conducting lines drawn from the interface sensor to be less than Z+1 (where Z is a total number of observation points), and a level gauge including this interface sensor will be disclosed.

[MEANS TO SOLVE THE PROBLEMS]

The herein described technical matters are not intended to expressly or implicitly limit the invention claimed in the claims, nor further to enable persons other than those benefited by the invention (for example, the applicant and the right holder) to limit the invention claimed in the claims, but are provided merely to facilitate an understanding of the gist of the present invention. An overview of the present invention from another point of view can be understood, for example, from the scope of claims at the time of filing this patent application.

A herein-disclosed sensor of the present disclosure is a sensor for locating a position of an interface between two types of substances (that is, a first substance and a second substance different from each other). This sensor includes a first electrical conductor, E second electrical conductors, L conducting lines, and a conducting line selector. E and L are given by the following formulas. In these formulas, K is a predetermined integer that satisfies $2 \leq K$, $n(j)$ is a predetermined integer that satisfies $2 \leq n(j)$ for any $j \in \{x \in N: 1 \leq x \leq K\}$, and N is a set of all positive integers.

[Formula 1]

$$E = \prod_{j=1}^{K} n(j) \ ,$$

$$L = \sum_{j=1}^{K} \Big( n(j) - 1 \Big) + 2$$

The E second electrical conductors are placed in E planes, which do not coincide with each other and which are parallel to each other, in order according to an order relation of elements of a set $\{x \in N: 1 \leq x \leq E\}$.

For any $p \in \{x \in N: 1 \leq x \leq E-1\}$, the p-th second electrical conductor among the E second electrical conductors is connected to the s(p)-th conducting line among the L conducting lines. s(p) is given by the following formula. In this formula, $n(0) = 1$.

[Formula 2]

$$s(p) = \left( p \Big/ \prod_{j=1}^{r} n(j-1) \right) \bmod n(r) + \sum_{j=1}^{r} \Big( n(j-1) - 1 \Big)$$

In the above formula, r is determined by $p \in W(r)$. The k-th set W(k) is given by the following formula for any $k \in \{x \in N: 1 \leq x \leq K\}$. In this formula, the (K+1)-th set W(K+1) is an empty set.

[Formula 3]

$$W(k) = \left\{ x \in N : 1 \leq x \leq E \ \wedge \ \left( \prod_{j=1}^{k} n(j-1) \right) \middle| x \right\} - \bigcup_{j=k}^{K} W(j+1)$$

The E-th second electrical conductor among the E second electrical conductors is connected to the L-th conducting line among the L conducting lines.

The conducting line selector is configured to select any one conducting line among the L conducting lines.

Alternatively, for any $k \in \{x \in N: 1 \leq x \leq K\}$, the conducting line selector selects:

(1) in a case where $k \neq K$ and $n(k) \neq 2$,

for any $y \in \{x \in N: 1 \leq x \leq n(k)-2\}$, two conducting lines determined by elements belonging to a set Y(y), among the L conducting lines, where

## [Formula 4]

$$Y(y) = \bigcup_{z=y}^{y+1} \left\{ \sum_{j=1}^{k} \left( n(j-1) - 1 \right) + z \right\} ,$$

and for y = n(k) - 1, (2 + $\Sigma_{j=k+1}^{K}$(n(j) - 1)) conducting lines determined by elements belonging to a set Y, among the L conducting lines, where

## [Formula 5]

$$Y = \left\{ \sum_{j=1}^{k} \left( n(j-1) - 1 \right) + y \right\} \bigcup_{m=k+1}^{K} \bigcup_{z=1}^{n(m)-1} \left\{ \sum_{j=1}^{m} \left( n(j-1) - 1 \right) + z \right\} \bigcup \left\{ L - 1 \right\} ,$$

(2) in a case where k ≠ K and n(k) = 2,
(2 + $\Sigma_{j=k+1}^{K}$(n(j) - 1) conducting lines determined by elements belonging to a set Y, among the L conducting lines, where

## [Formula 6]

$$Y = \left\{ \sum_{j=1}^{k+1} \left( n(j-1) - 1 \right) \right\} \bigcup_{m=k+1}^{K} \bigcup_{z=1}^{n(m)-1} \left\{ \sum_{j=1}^{m} \left( n(j-1) - 1 \right) + z \right\} \bigcup \left\{ L - 1 \right\} ,$$

and
(3) in a case where k = K,
for any y ∈ {x ∈ N:1 ≤ x ≤ n(k) - 1}, two conducting lines determined by elements belonging to a set Y(y), among the L conducting lines, where

## [Formula 7]

$$Y(y) = \bigcup_{z=y}^{y+1} \left\{ \sum_{j=1}^{k} \left( n(j-1) - 1 \right) + z \right\} ,$$

[EFFECTS OF THE INVENTION]

According to the present invention, it is possible to reduce a total number L of conducting lines to be drawn from an interface sensor to less than Z + 1 (where Z is a total number of observation points).

[BRIEF DESCRIPTION OF THE DRAWINGS]

[FIGURE 1] a view illustrating a configuration example of a water level sensor in prior art;
[FIGURE 2] a view illustrating a configuration of Example 1 of a water gauge according to the present invention;
[FIGURE 3] (a) a view illustrating operation of the water gauge shown in FIG. 2, and (b) a view illustrating operation of the water gauge shown in FIG. 2;
[FIGURE 4] a flowchart showing a flow of water level measurement by the water gauge shown in FIG. 2;
[FIGURE 5] a table showing operation of a switch in the water level measurement by the water gauge shown in FIG. 2;
[FIGURE 6] a view illustrating a configuration of Example 2 of the water gauge according to the present invention;
[FIGURE 7] a flowchart showing a flow of water level measurement by the water gauge shown in FIG. 6;
[FIGURE 8] a table showing operation of a switch in the water level measurement by the water gauge shown in FIG. 6;
[FIGURE 9] a view illustrating a configuration of Example 3 of the water gauge according to the present invention;

[FIGURE 10] (a) a view illustrating operation of the water gauge shown in FIG. 9, and (b) a view illustrating operation of the water gauge shown in FIG. 9;
[FIGURE 11] a table showing operation of a switch in water level measurement by the water gauge shown in FIG. 9;
[FIGURE 12] a view illustrating a configuration of Example 4 of the water gauge according to the present invention;
[FIGURE 13] a table showing operation of a switch in water level measurement by the water gauge shown in FIG. 12;
[FIGURE 14] a view illustrating a configuration of Example 5 of the water gauge according to the present invention;
[FIGURE 15] a configuration example of an interface sensor which is related to an interface sensor of the present disclosure, but not protected by the claims of the present application;
[FIGURE 16] a configuration example of the interface sensor of the present disclosure; and
[FIGURE 17] a configuration example of the interface sensor of the present disclosure.

## DETAILED DESCRIPTION OF THE EMBODIMENTS

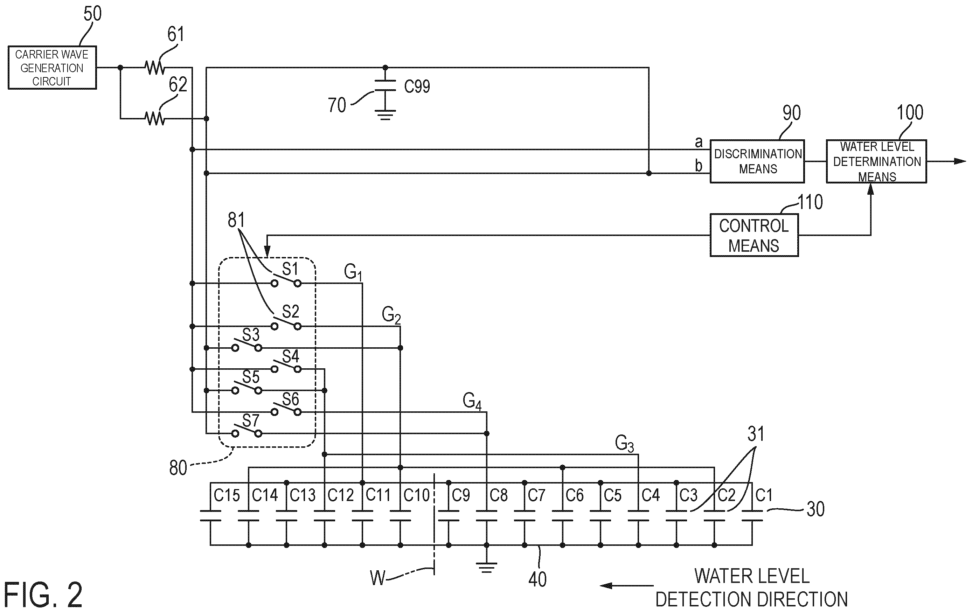

A level gauge of an embodiment of the present invention will be described using examples with reference to the drawings. Hereinafter, in description regarding FIGS. 2 to 14, water is employed as an example of a liquid.

[Example 1]

FIG. 2 illustrates a configuration of Example 1 of a water gauge according to the present invention, and the water gauge includes a sensor part 30, a grounded conductor 40, a carrier wave generation circuit 50, two resistors 61 and 62, an adjustment part 70, switching means 80, discrimination means 90, water level determination means 100, and control means 110.

The sensor part 30 has a plurality of (in this example, 15) electrodes 31 arranged in a water level detection direction, and the electrodes 31 form capacitance between the electrodes 31 and the grounded conductor 40 extending in the water level detection direction. Although a substrate is not illustrated, these electrodes 31 are provided on the substrate in a pattern, and waterproof coating is applied on the pattern. The grounded conductor 40 is, for example, constituted with a metal pipe surrounding a periphery of the sensor part 30, and the metal pipe is, for example, made of stainless steel. Note that as illustrated in FIG. 2, reference numerals C1 to C15 are assigned to the 15 electrodes 31 in order from the electrode located at the lowermost position in the water level detection direction.

The 15 electrodes 31 are divided into four groups. Here, in a case where the number of groups is set as n, and n groups are referred to as the first to the n-th group, the electrodes 31 constituting the i-th group (i = 1, 2, ..., n) are the electrodes 31 located at the $2^{i-1}(2k-1)$-th (where k is a natural number from 1 to $2^{n-i}$) position from the lowermost position in the water level detection direction, and in this example, n = 4, and thus, the electrodes 31, denoted by C1 to C15, constituting the respective groups are as follows.

First group: C1, C3, C5, C7, C9, C11, C13, C15
Second group: C2, C6, C10, C14
Third group: C4, C12
Fourth group: C8

All the electrodes 31 belonging to the same group are connected to each other in parallel and connected to the switching means 80.

The switching means 80 includes seven switches 81 in this example as denoted by reference numerals S1 to S7 and has a configuration in which detection values (capacitance of respective groups) obtained by the respective groups of the sensor part 30 can be input (connected) to one of two inputs a and b of the discrimination means 90 by switching a path by turning ON/OFF of these switches 81.

The carrier wave generation circuit 50 is connected to two wires leading to two inputs a and b of the discrimination means 90 from the switching means 80 respectively via the resistors 61 and 62. The carrier wave generation circuit 50 generates and outputs a carrier wave.

The adjustment part 70 is a capacitor having capacitance as described later and has one end connected to the wire leading to the input b of the discrimination means 90 from the switching means 80, and the other end is grounded.

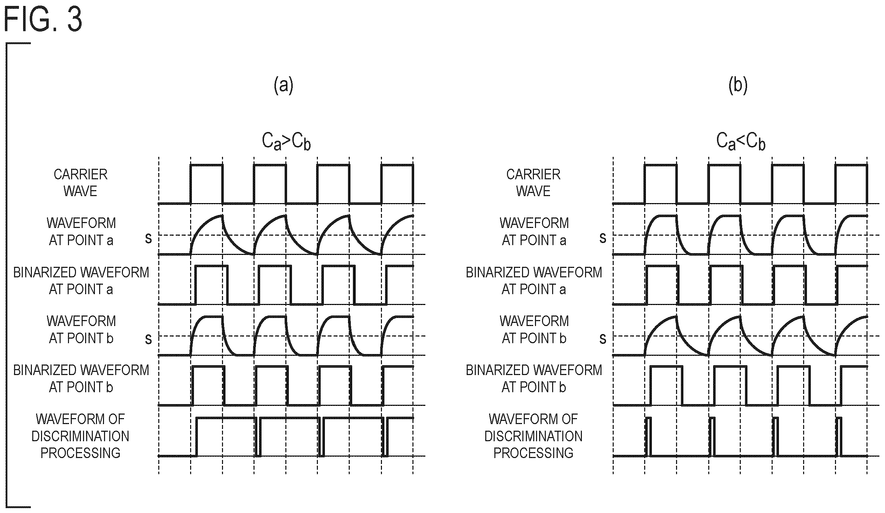

The discrimination means 90 discriminates a larger and smaller relationship between the capacitance connected to the input a and the capacitance connected to the input b. Here, in a case where the capacitance connected to the input a is set as $C_a$, and the capacitance connected to the input b is set as $C_b$, circuit operation of the discrimination means 90 that discriminates a larger and smaller relationship between $C_a$ and $C_b$ will be described with reference to a timing chart illustrated in FIG. 3.

In a case where $C_a > C_b$, the timing chart illustrated in FIG. 3(a) is obtained. A CR delay circuit is formed by the carrier wave generation circuit 50, resistance of the resistor 61 and the capacitance $C_a$, and thus, a waveform at a point a becomes a waveform in which a delay occurs with respect to a carrier wave (rectangular wave) to be output by the carrier wave generation circuit 50. A waveform at a point b becomes a waveform in which a delay occurs in a similar manner, but $C_a > C_b$, and thus, the delay is smaller in the waveform at the point b. The discrimination means 90 includes a circuit that binarizes a voltage s for each of the waveforms as a threshold in this example, and a logic circuit that sets Hi at rising of binarization of the waveform at the point a and sets Lo at rising of binarization of the waveform at the point b, and a waveform of discrimination processing (output waveform of the logic circuit) becomes as illustrated in FIG. 3(a). In a case where $C_a > C_b$, the waveform of the discrimination processing becomes Hi during a period exceeding a half cycle, and thus, a period of Hi becomes longer than a period of Lo.

In a case where $C_a < C_b$, the timing chart illustrated in FIG. 3(b) is obtained. In this case, a delay in the waveform at the point a is smaller, the waveform of the discrimination processing becomes as illustrated in FIG. 3(b) with the circuit configuration described above, and the waveform becomes Lo during a period exceeding a half cycle, and thus, a period of Lo becomes longer than a period of Hi. Thus, larger and smaller discrimination of $C_a$ and $C_b$ can be performed by comparing the period of Hi and the period of Lo of the waveform of the discrimination processing, and the discrimination means 90 outputs 1 in a case where $C_a > C_b$ and outputs 0 in a case where $C_a < C_b$.

The water level determination means 100 determines a water level based on the discrimination by the discrimination means 90 operating in this manner and outputs the water level to outside. Note that ON/OFF of seven switches 81 of the switching means 80 is controlled by a control signal from the control means 110, and a signal in synchronization with this control is also input to the water level determination means 100 from the control means 110.

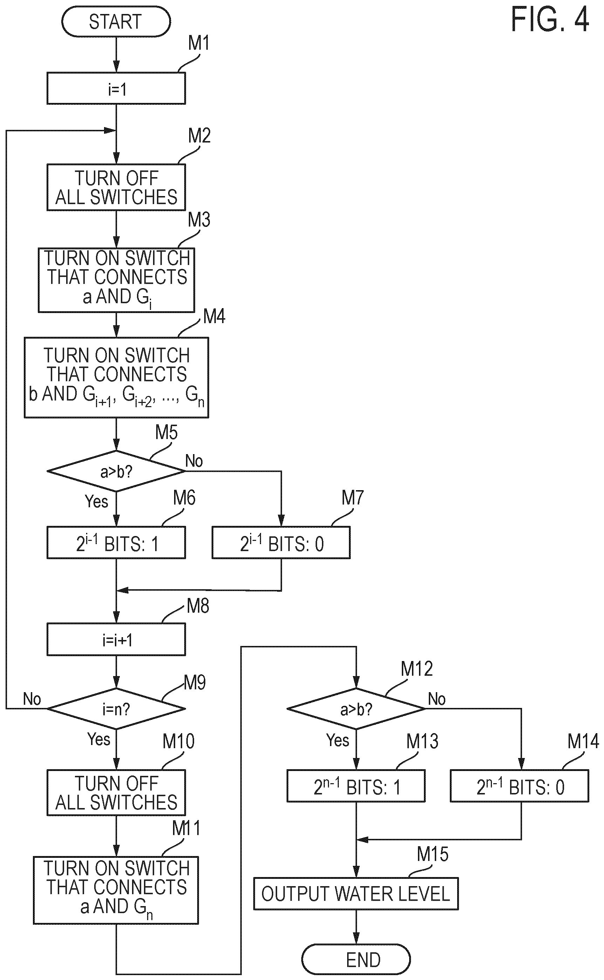

Next, a flow until the water gauge having such a configuration outputs a water level will be described with reference to a flowchart shown in FIG. 4. Note that in FIG. 4, the number of groups is set as n, $G_i$ indicates the i-th group, and $G_{i+1}$, $G_{i+2}$, and $G_n$ respectively indicate the (i+1)-th group, the (i+2)-th group, and the n-th group.

First, i = 1 is set (step M1), and all the switches 81 of the switching means 80 are turned OFF (step M2). Then, the switch 81 that connects the input a of the discrimination means 90 and $G_i$ is turned ON, and further, the switches 81 that connect the input b of the discrimination means 90 and $G_{i+1}$, $G_{i+2}$, ..., $G_n$ are turned ON (step M3, M4). The discrimination means 90 discriminates a larger and smaller relationship between the inputs a and b (step M5), and if a > b, outputs 1 to the water level determination means 100, and if a < b, outputs 0 to the water level determination means 100. The water level determination means 100 stores this as a value of $2^{i-1}$ bits (step M6, M7).

Then, i = i + 1 is set (step M8), whether i = n or not is determined (step M9), and if i = n is false, the processing returns to step M2, and the steps M2 to M9 are repeated until i = n.

If i = n, after all the switches 81 of the switching means 80 are turned OFF (step M10), the switch 81 that connects the input a of the discrimination means 90 and $G_n$ is turned ON (step M11). The discrimination means 90 discriminates a larger and smaller relationship between the inputs a and b (step M12), if a > b, outputs 1 to the water level determination means 100, and if a < b, outputs 0 to the water level determination means 100. The water level determination means 100 stores this as a value of $2^{n-1}$ bits (step M13, M14), and the water level determination means 100 converts the value of $2^0$ bits to $2^{n-1}$ bits obtained in this manner, that is, binary into the water level with reference to a memory and outputs the water level (step M15).

In this manner, in this example, the discrimination means 90 discriminates a larger and smaller relationship between a detection value obtained by the i-th group and a detection value obtained by a group that is a combination from the (i+1)-th group to the n-th group for each of i = 1, 2, ..., n-1 and further discriminates a larger and smaller relationship between a detection value obtained by the n-th group and a detection value obtained by the adjustment part 70, thereby measures the water level. The switching means 80 sequentially switches connection between the groups of the sensor part 30 and the discrimination means 90 so as to enable such discrimination by the discrimination means 90.

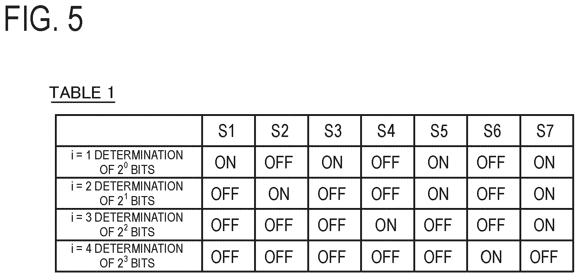

Table 1 shown in FIG. 5 indicates ON/OFF of seven switches 81, that is, S1 to S7 of the switching means 80 if i = 1 to 4 in the water gauge illustrated in FIG. 2, that is, the water gauge in which the number n of the groups of the sensor part 30 is four, and i becomes 1 to 4 in the flowchart shown in FIG. 4. In the water gauge illustrated in FIG. 2, in a case where the first group to the fourth group are indicated as $G_1$ to $G_4$, connections between the groups and the two inputs a and b of the discrimination means 90 become as follows if i = 1 to 4.

|  | Input a | Input b |
|---|---|---|
| i = 1: determination of $2^0$ bits | $G_1$ | $G_2 + G_3 + G_4$ |
| i = 2: determination of $2^1$ bits | $G_2$ | $G_3 + G_4$ |
| i = 3: determination of $2^2$ bits | $G_3$ | $G_4$ |
| i = 4: determination of $2^3$ bits | $G_4$ | N/A (= not applicable) |

Capacitance connected to the inputs a and b of the discrimination means 90 will be specifically described below using an example where a water level W is located at a position indicated by a dash-double-dot line in FIG. 2 and the electrodes from the lowermost electrode to the ninth electrode C9 are soaked in water.

Capacitance when the electrode 31 is located in the air is denoted by $C_{air}$, and capacitance when the electrode 31 is located in the water is denoted by $C_{water}$. The capacitor of the adjustment part 70 is denoted by C99 in the following description, and capacitance is set as 0.5 $C_{water}$. Relative permittivity of water is 80 at 20°C, and $C_{water} = 80\ C_{air}$. In a case where i = 1 to 4, the capacitance connected to the inputs a and b becomes as follows.

<i = 1: determination of $2^0$ bits>

- Input a:

$$G_1 = C1 + C3 + C5 + C7 + C9 + C11 + C13 + C15$$

$$= 5\ C_{water} + 3\ C_{air} = 403\ C_{air}$$

- Input b:

$$G_2 + G_3 + G_4 = C2 + C4 + C6 + C8 + C10 + C12 + C14 + C99$$

$$= 4.5\ C_{water} + 3\ C_{air} = 363\ C_{air}$$

<i = 2: determination of $2^1$ bits>

- Input a:

$$G_2 = C2 + C6 + C10 + C14$$

$$= 2\ C_{water} + 2\ C_{air} = 162\ C_{air}$$

- Input b:

$$G_3 + G_4 = C4 + C8 + C12 + C99$$

$$= 2.5\ C_{water} + C_{air} = 201\ C_{air}$$

<i = 3: determination of $2^2$ bits>

- Input a:

$$G_3 = C4 + C12$$

$$= C_{water} + C_{air} = 81\ C_{air}$$

- Input b:

$$G_4 = C8 + C99$$

$$= 1.5\ C_{water} = 120\ C_{air}$$

<i = 4: determination of $2^3$ bits>

- Input a:

$$G_4 = C8$$

$$= C_{water} = 80\ C_{air}$$

- Input b:

$$N/A = C99$$

$$= 0.5\ C_{water} = 40\ C_{air}$$

From the above, if i = 1, a > b and $2^0$ bits become 1, and if i = 2, a < b and $2^1$ bits become 0. Further, if i = 3, a < b and $2^2$ bits become 0, and if i = 4, a > b and $2^3$ bits become 1. Thus, a result of adding these becomes 1001 in binary and becomes 9 in decimal.

In this manner, in the water gauge illustrated in FIG. 2, the water level is processed as binary, and in a case of a low water level at which all the electrodes 31 are not soaked in water, the result becomes 0000 in binary, and in a case of a high water level at which all the electrodes 31 are soaked in water, the result becomes 1111 in binary (15 in decimal).

The adjustment part 70 is a capacitor having capacitance of 0.5 $C_{water}$ in this example. The adjustment part 70 is constantly connected to the input b of the discrimination means 90 and functions to compare with $G_4$ upon determination of $2^3$ bits if i = 4. The adjustment part 70 functions so that two detection values (capacitance) for which a larger and smaller relationship is to be discriminated by the discrimination means 90 always become values different from each other. In other words, the adjustment part 70 functions to avoid erroneous detection as a result of the larger and smaller relationship being inverted due to an error cause, or the like. Note that sensitivity can be adjusted by adjusting resistance values of the resistors 61 and 62.

Examples 2 to 5 will be described below. Note that portions corresponding to the components of Example 1 illustrated in FIG. 2 will be denoted by the same reference numerals, and detailed description thereof will be omitted.

[Example 2]

As described above, the adjustment part 70 functions so that the detection value appropriately changes according to the water level and so that erroneous detection does not occur. However, for example, in a case where an error of capacitance of the electrodes 31 is not uniform, a situation can occur in which the detection value does not appropriately change according to the water level only with capacitance of one adjustment part 70 if a combination of the groups of the electrodes changes.

For example, in the water gauge illustrated in FIG. 2, suppose only the electrode 31 denoted by C4 has an error of +0.5 $C_{water}$. In other words, in a case of the water level W, C4' = 1.5 $C_{water}$. In this event, if i = 1 to 4, the capacitance connected to the inputs a and b of the discrimination means 90 becomes as follows.

<i = 1: determination of $2^0$ bits>

- Input a:

$$G_1 = C1 + C3 + C5 + C7 + C9 + C11 + C13 + C15$$

$$= 5\ C_{water} + 3\ C_{air} = 403\ C_{air}$$

- Input b:

$$G_2 + G_3 + G_4 = C2 + C4' + C6 + C8 + C10 + C12 + C14 + C99$$

$$= 4.5\ C_{water} + 3\ C_{air} + C99 = 363\ C_{air} + C99$$

<i = 2: determination of $2^1$ bits >

- Input a:

$$G_2 = C2 + C6 + C10 + C14$$

$$= 2\,C_{water} + 2\,C_{air} = 162\,C_{air}$$

- Input b:

$$G_3 + G_4 = C4' + C8 + C12 + C99$$

$$= 2.5\,C_{water} + C_{air} + C99 = 201\,C_{air} + C99$$

<i = 3: determination of $2^2$ bits>

- Input a:

$$G_3 = C4' + C12$$

$$= 1.5\,C_{water} + C_{air} = 121\,C_{air}$$

- Input b:

$$G_4 = C8 + C99$$

$$= C_{water} + C99 = 80\,C_{air} + C99$$

<i = 4: determination of $2^3$ bits>

- Input a:

$$G_4 = C8$$

$$= C_{water} = 80\,C_{air}$$

- Input b:

$$N/A = C99$$

A true value of binary is 1001, and thus, a relationship between a and b must be such that if i = 1, a > b, if i = 2, a < b, and if i = 3, a < b, and if i = 4, a > b. Thus, a relationship must be such that if i = 1, 403 $C_{air}$ > 363 $C_{air}$ + C99, and thus, C99 < 40 $C_{air}$, and if i = 3, 121 $C_{air}$ < 80 $C_{air}$ + C99, and thus, C99 > 41 $C_{air}$. Accordingly, C99 that satisfies the both does not exist, and thus, one C99 that satisfies all determination of $2^i$ bits, that is, the adjustment part 70 does not exist.

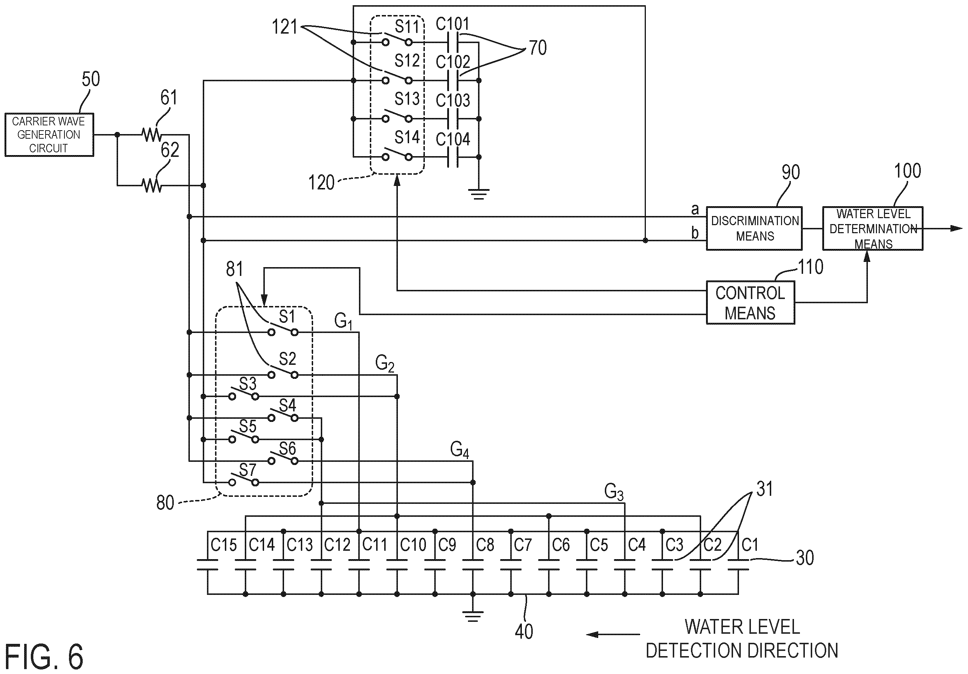

To address such a problem, in Example 2, as illustrated in FIG. 6, a plurality of (in this example, four, denoted by reference numerals C101 to C104) adjustment parts 70 are provided, and further, switching means 120 that switches connection of the adjustment parts 70 to the input b of the discrimination part 90 is provided. The switching means 120 includes four switches 121 denoted by reference numerals S11 to S14 which turn ON/OFF the connection of the respective adjustment parts 70, that is, C101 to C104 to the input b.

In this example, by providing a plurality of adjustment parts 70 in this manner and performing switching at the switching means 120, the adjustment part 70 to be caused to function can be selected according to groups (combination of groups) connected to the discrimination means 90.

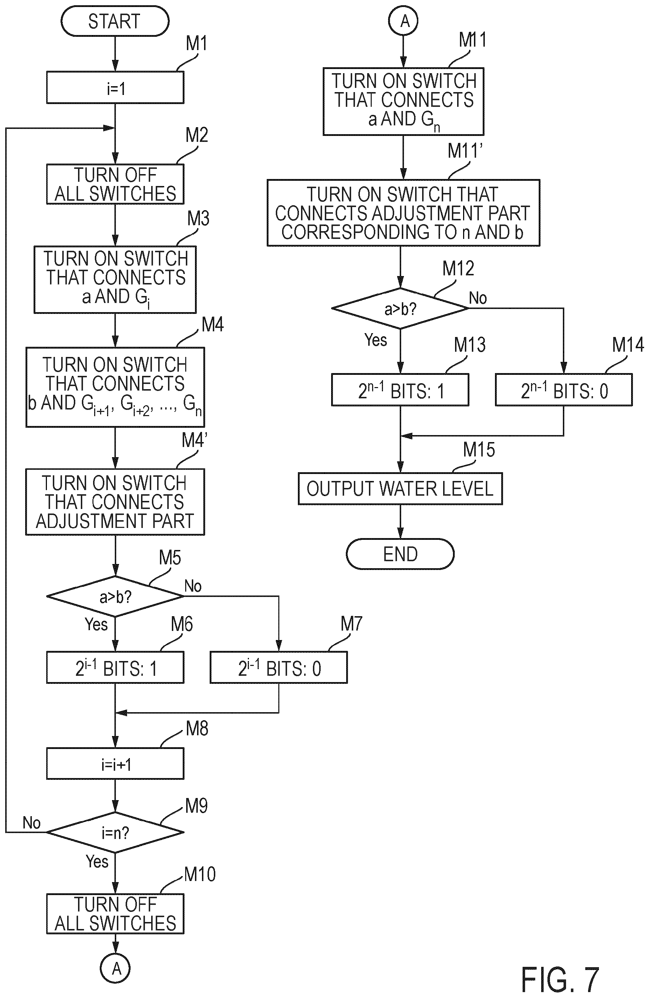

The flowchart in FIG. 7 shows a flow until the water gauge in Example 2 outputs the water level, in which step M4' of "turning ON a switch that connects the adjustment part corresponding to i and b" is added between step M4 and step M5, and a step M11' of "turning ON a switch that connects the adjustment part corresponding to n and b" is added between step M11 and step M12 in the flowchart shown in FIG. 4 described above.

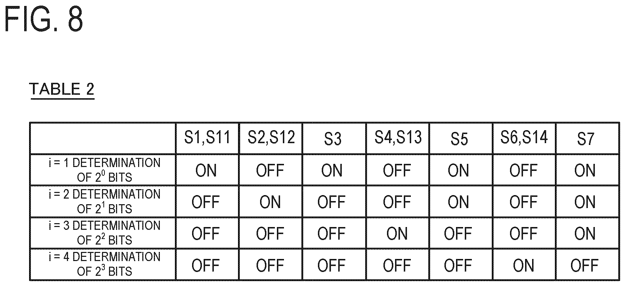

In Table 2 shown in FIG. 8, ON/OFF of the four switches 121, that is, S11 to S14 of the switching means 120 if i = 1 to 4 is added to the content of Table 1 shown in FIG. 5. In this example, C101 is selected from four adjustment parts 70, that is, C101 to C104 if i = 1, C102 is selected if i = 2, C103 is selected if i = 3, C104 is selected if i = 4, and the selected adjustment parts are connected to the input b of the discrimination means 90. ON/OFF of the four switches 121 of the switching means 120 is controlled by a control signal from the control means 110, which is in synchronization with a control signal that controls the switching means 80. Note that capacitance values of the four adjustment parts 70 are determined by a preliminary test.

[Example 3]

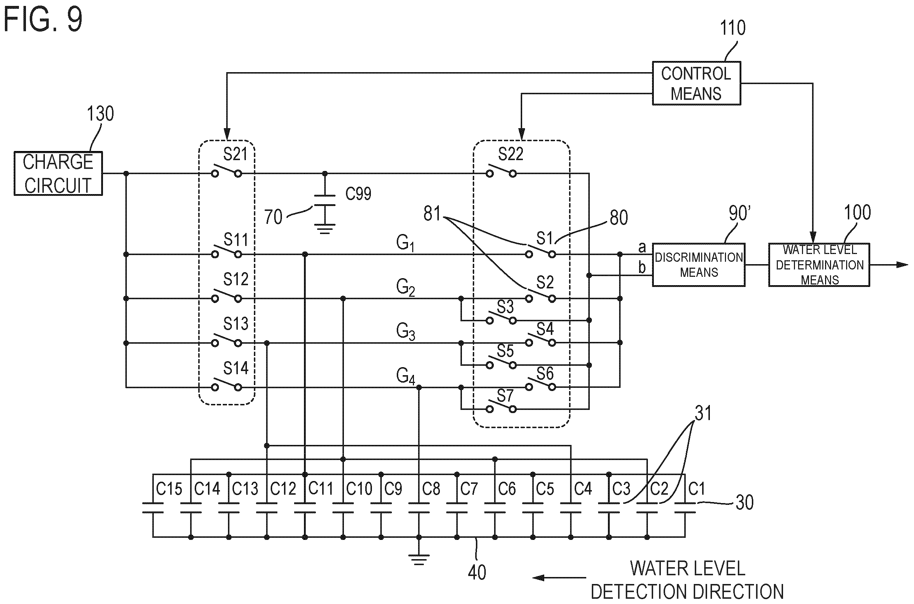

FIG. 9 illustrates a configuration of Example 3 of the water gauge according to the present invention. In this example, a charge circuit 130 is provided as the input circuit instead of the carrier wave generation circuit 50, capacitance detection is performed by a switched capacitor, switches S11 to S14 are respectively provided between the four groups $G_1$ to $G_4$ constituted with the electrodes 31 of the sensor part 30 and the charge circuit 130, and the switching means 80 including seven switches 81, that is, S1 to S7 are located between the four groups $G_1$ to $G_4$ and discrimination means 90'. Further, a switch S21 is provided between the adjustment part 70 and the charge circuit 130, and a switch S22 is provided between the adjustment part 70 and the discrimination means 90'.

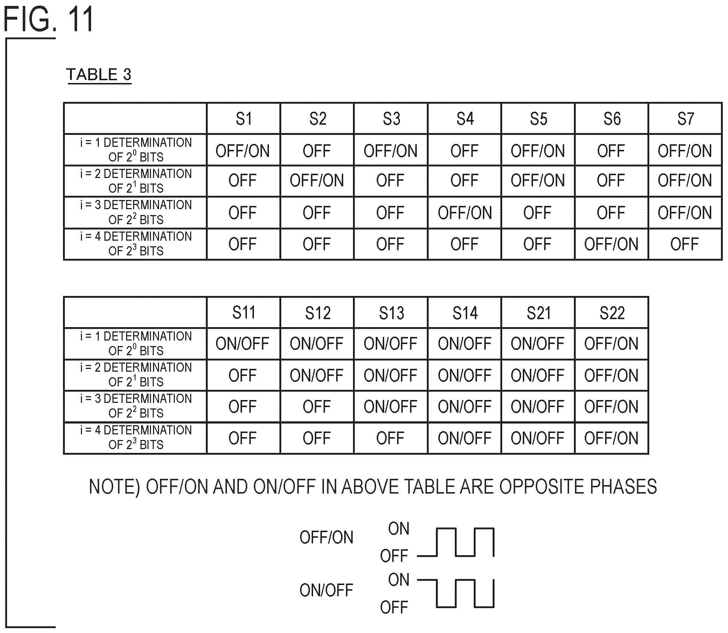

This water gauge also performs water detection basically according to the flowchart shown in FIG. 4, and the switches S1 to S7, S11 to S14, and S21 to S22 are controlled as shown in Table 3 in FIG. 11 in each case where i = 1 to 4.

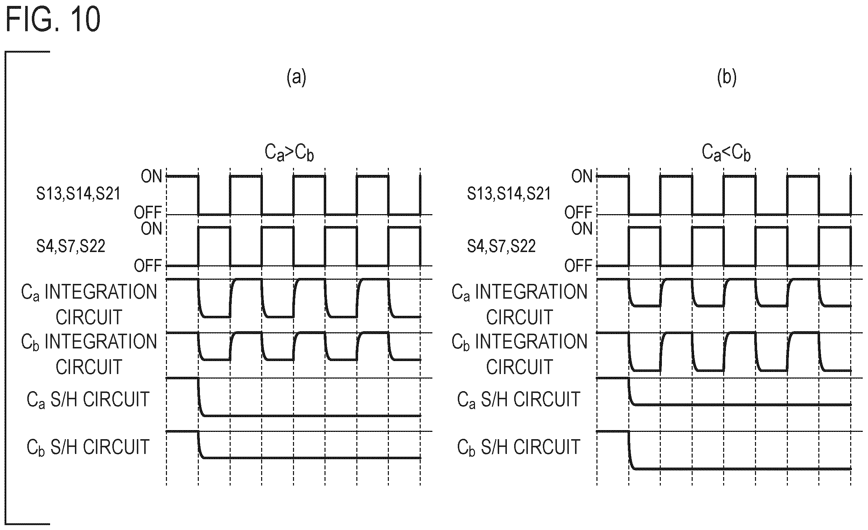

While the discrimination means 90' discriminates a larger and smaller relationship of the capacitance and outputs 1 or 0, a configuration (circuit configuration) and operation of the discrimination means 90' is different from those of the discrimination means 90. As an example, the circuit operation of the discrimination means 90' that discriminates a larger and smaller relationship between $C_a$ and $C_b$ respectively connected to the inputs a and b will be described below with reference to the timing chart illustrated in FIG. 10 using an example of a case where i = 3.

In a case where the switches S13, S14 and S21 are ON, and the switches S4, S7 and S22 are OFF, the third group $G_3$ and the fourth group $G_4$ of the sensor part 30, and the adjustment part 70 are charged with a voltage $E_0$ generated by the charge circuit 130. The discrimination means 90' includes an integration circuit and a sample hold circuit (S/H circuit) for each of $C_a$ and $C_b$. If the switches S13, S14 and S21 are turned OFF, and the switches S4, S7 and S22 are turned ON, charges of $C_a$ and $C_b$ move to the integration circuits. In this event, amplitude voltages $V_a$ and $V_b$ of the integration circuits of $C_a$ an $C_b$ are given as follows in a case where integration capacitance is set at $C_s$.

[Formula 8]

$$V_a = -\frac{1}{C_s}\int i\,dt = -\frac{Q_a}{C_s} = -\frac{C_a}{C_s}E_0$$

$$V_b = -\frac{1}{C_s}\int i\,dt = -\frac{Q_b}{C_s} = -\frac{C_b}{C_s}E_0$$

$V_a$ and $V_b$ can be obtained as DC voltages by the sample hold circuit located in the subsequent stage of the integration circuits, and in a case where $C_a > C_b$, the timing chart illustrated in FIG. 10(a) is obtained, and in a case where $C_a < C_b$, the timing chart illustrated in FIG. 10(b) is obtained. Thus, larger and smaller discrimination between $C_a$ and $C_b$ can be performed by comparing the voltage values, and the discrimination means 90' outputs 1 in a case where $C_a > C_b$ and outputs 0 in a case where $C_a < C_b$ in a similar manner to the discrimination means 90. The water level determination means 100 converts an output of the discrimination means 90' into a water level and outputs the water level in a similar manner to the water level determination means 100 in FIG. 2.

[Example 4]

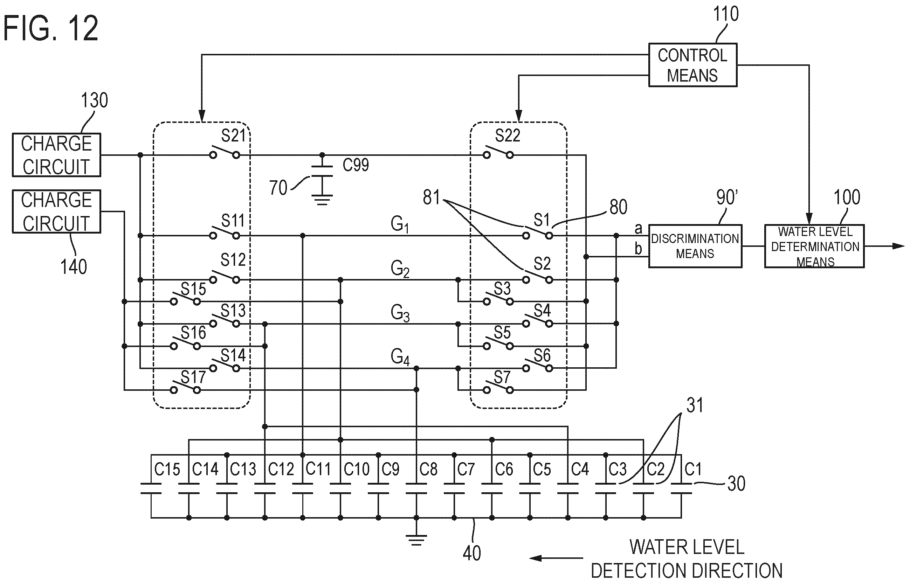

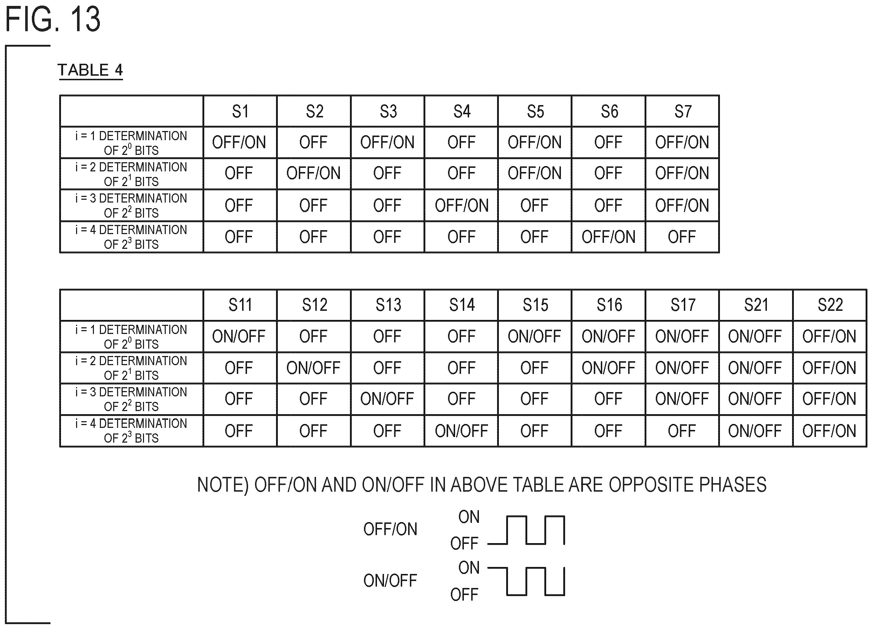

FIG. 12 illustrates a water gauge of Example 4. This water gauge is a modification of the water gauge of Example 3, and includes two charge circuits. Voltages to be charged to the respective groups $G_1$ to $G_4$ of the sensor part 30 can be changed by two charge circuits 130 and 140. Switches S15 to S17 are respectively provided between the groups $G_2$ to $G_4$ and the charge circuit 140. In this example, the switches S1 to S7, S11 to S17, and S21 to S22 are, for example, controlled as shown in Table 4 in FIG. 13 in each case where i = 1 to 4.

According to this configuration, for example, in a case where it is desired to adjust sensitivity of the electrodes 31 with respect to water, voltages of the two integration circuits provided in the discrimination means 90' are proportional to voltages of the charge circuits, and thus, by adjusting the voltages of the charge circuits 130 and 140, such sensitivity can be adjusted.

[Example 5]

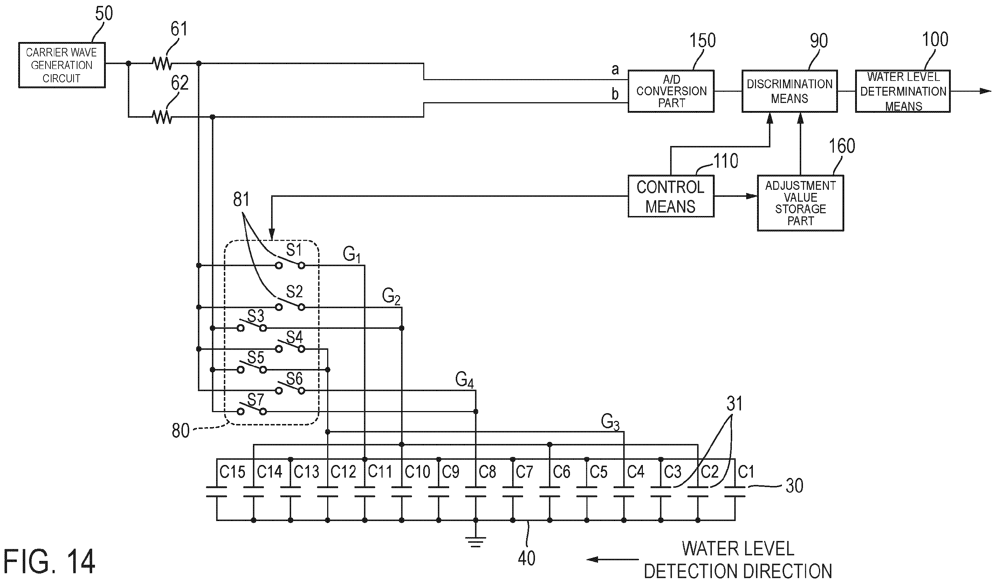

FIG. 14 illustrates a water gauge of Example 5, and in this example, an A/D conversion part 150 is provided between the switching means 80 and the discrimination means 90, and further, an adjustment value storage part 160 that stores an adjustment value (capacitance adjustment voltage value) obtained in advance as a digital value is provided. An IC and a plurality of resistors are required for an analog circuit to compare voltages and, for example, as in a configuration having four adjustment parts 70 illustrated in Example 2, there is a disadvantage that as the number of the adjustment values increases, a circuit scale increases. A method in which the switching means 80 sequentially switches connection between the groups of the sensor part 30 and the A/D conversion part 150 is similar to that in Example 1. In this example, the waveform at the point a and the waveform at the point b in FIG. 3 are acquired as digital data, so that it is possible to perform the subsequent processing digitally. By using the adjustment value as an offset of a measurement value of the waveform at the point b, effects similar to those provided by the adjustment part in Example 1 and Example 2 can be obtained. Further, the A/D conversion part 150 may measure a difference voltage between the input a and the input b. The adjustment value in this case is used as an offset of the difference voltage.

Although various kinds of examples of the water gauge according to the present invention have been described above, the water gauge according to the present invention can achieve resolution corresponding to the number of electrodes by dividing a plurality of electrodes which are arranged in a water level detection direction and form capacitance between the electrodes and the grounded conductor into n groups, constituting the i-th (i = 1, 2, ..., n) group with an electrode located at the $2^{i-1}(2k-1)$-th (k is a natural number from 1 to $2^{n-i}$) position from a lowermost position in the water level detection direction and repeating larger and smaller comparison of the capacitance while changing combinations of the groups.

Thus, the number of wires (wires on the detection side) to be connected to the discrimination means from the respective electrodes of the sensor part corresponds to the number of groups, and only one discrimination means is required.

Further, for example, suppose the water level is detected at 1000 stages (resolution of 1/1000 with respect to a measurement range), in a case of a configuration as in the related art illustrated in FIG. 1, the number of discrimination means and the number of electrodes respectively become 1000, and the number of wires leading to the discrimination means on the detection side becomes 1000.

In contrast, in the water gauge according to the present invention, the group configuration as described above enables measurements of $2^{n}-1$ electrodes by n groups, that is, enables to achieve resolution of $1/(2^{n}-1)$ by n groups, and thus, in order to achieve resolution of 1/1000, only 10 groups are required, and only 10 wires are required on the detection side.

The water gauge described above can be, for example, used to measure a water level of a river, and the like, and, when the water level of the river is measured, in a case where the grounded conductor 40 is a metal pipe, the metal pipe is driven into the ground at the bottom of the river. Note that the water gauge described above can be applied to, for example, a liquid level gauge, or the like, that detects a liquid level of a liquid within a tank.

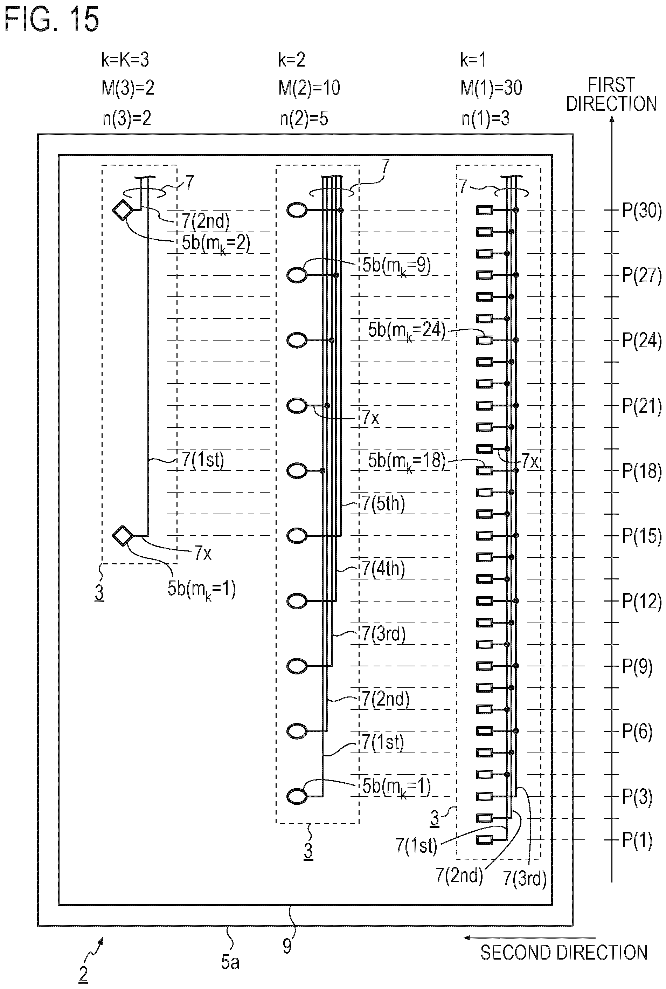

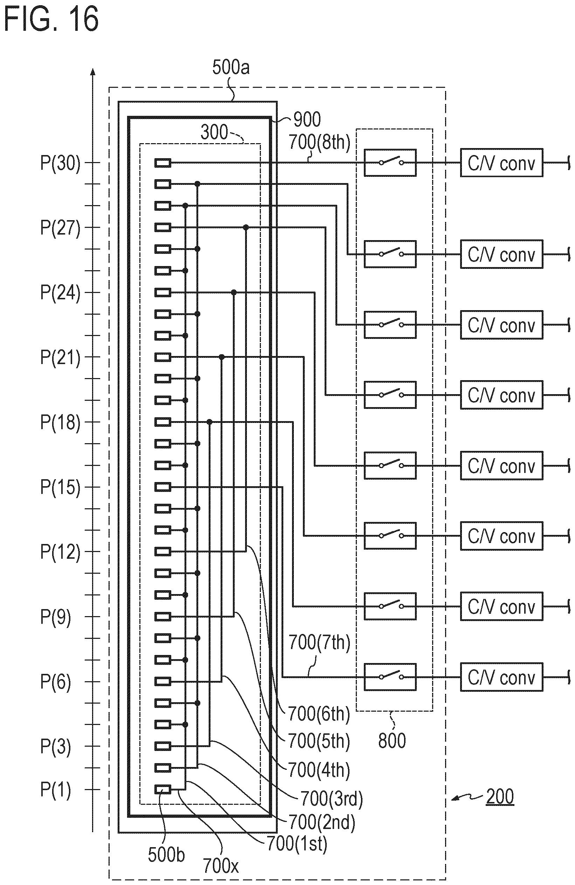

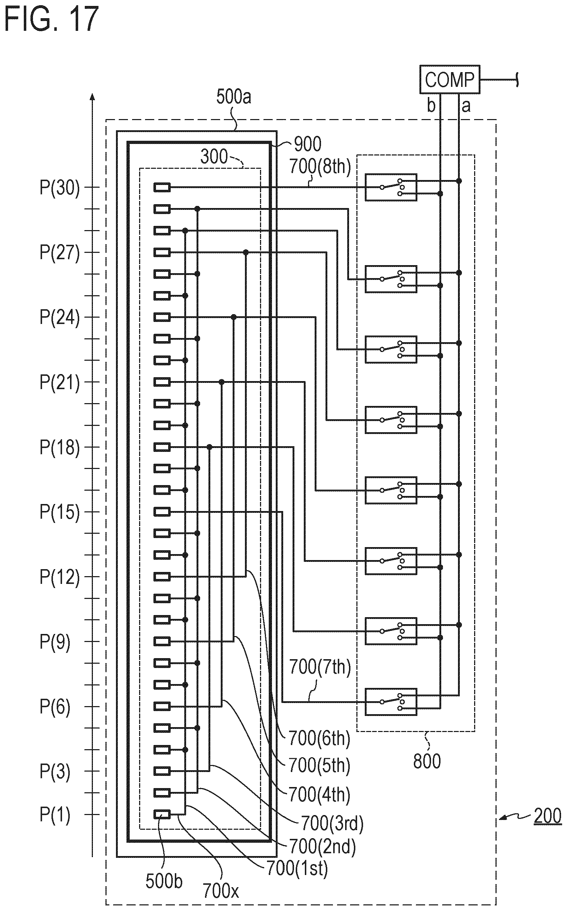

The interface sensor 200 herein disclosed and the level gauge including the interface sensor 200 will be described below in other points of view with reference to FIGS. 16 and 17 illustrating a non-limited example. Prior to the description thereof, in order to facilitate understanding of the interface sensor 200 herein disclosed, an interface sensor 2 related to the interface sensor 200 herein disclosed will be described with reference to FIG. 15. Note that while the interface sensor 2 is not protected by the claims of the present application, description of the interface sensor 2 is useful for understanding of the interface sensor 200, and thus, the description of the interface sensor 2 will be incorporated into the description of the interface sensor 200 as necessary. Note that the incorporation of the description will not be always explicitly performed.

The interface sensor 2 is a sensor for locating a position of an interface between two types of substances (that is, a first substance and a second substance different from each other). However, the number of interfaces has to be 1 or 0 in a range from a plane P(1) to a plane P(M(1)) as described later to accurately locate the position. As described later, the interface sensor 2 includes a first electrical conductor 5a and E second electrical conductors 5b (E will be expressed in Formula (4) later). E pairs of electrodes are formed between the first electrical conductor 5a and the E second electrical conductors 5b. The position of the interface between the first substance and the second substance is located by using physical quantities produced in each of the E pairs of electrodes, corresponding to a property of the first substance or second substance present between electrodes of each of the E pairs of electrodes. The "interface" is a contact boundary between the first substance as a homogeneous phase and the second substance as a homogeneous phase. The "homogeneous phase" is an entity of a material system which is uniform in chemical composition and physical state. In other words, when physical properties and chemical properties of any portion V of an entity of one material system are respectively the same as physical properties and chemical properties of any portion W different from the portion V of the entity of the material system, the entity of the material system is a "homogeneous phase." A typical example of the interface sensor 2 is a sensor for locating a position of an interface between a liquid (for example, water) as the first substance and a gas (for example, air) as the second substance.

A configuration of the interface sensor 2 will be described. Symbols appearing in the following description are unrelated to symbols used in the description of the embodiments described above. Further, RC=$\varepsilon\rho$ holds, where C is capacitance between two conductors with equal positive and negative charges, R is electrical resistance between the two conductors, $\varepsilon$ is dielectric constant of a medium between the two conductors, and $\rho$ is electrical resistivity of the medium between the two conductors. Therefore, only the case of the capacitance of the pair of electrodes will be described, and the description of the case of the electrical resistance of the pair of electrodes will be omitted.

The interface sensor 2 includes the first electrical conductor 5a and K sensor blocks 3. Here, K is a predetermined integer satisfying $2 \leq K$.

The K sensor blocks 3 are formed on F substrates 9 each having a flat plate shape, although not limited thereto. F is a predetermined integer satisfying $1 \leq F \leq K$. In a case where F < K, there is a substrate 9 having two or more sensor blocks 3. In the example shown in FIG. 15, F = 1. In a case where $F \geq 2$, the F substrates 9 may be disposed on one plane, or may be arranged like an angle steel or a channel steel, or may be arranged like a triangular pipe or a quadrangular pipe, although not limited thereto.

The first electrical conductor 5a is, for example, a metal. The first electrical conductor 5a may be one electrical conductor or may include two or more electrical conductors.

In a case where the first electrical conductor 5a is a single electrical conductor, the first electrical conductor 5a may have a flat plate shape or a cylindrical shape, although not limited thereto. In a case where the first electrical conductor 5a has a cylindrical shape, a cross-sectional shape of the cylinder in a cross-section perpendicular to a longitudinal direction of the cylinder is, for example, a circle or a rectangle. In a case where the first electrical conductor 5a has a cylindrical shape, the K sensor blocks 3 are customarily arranged inside the first electrical conductor 5a, but the arrangement is not limited to this.

In a case where the first electrical conductor 5a includes two or more electrical conductors, each of the electrical conductors included in the first electrical conductor 5a may have a flat plate shape or a shape of each component constituting the above-described cylinder (for example, a shape of an object obtained by cutting the above-described cylinder in a direction perpendicular to the longitudinal direction of the cylinder (in short, it is a cylinder shorter than the above-described cylinder) or a shape of an object obtained by cutting the above-described cylinder in the longitudinal direction of the cylinder (for example, in a case of a cylinder, it is a 1/4 cylindrical shape)), although not limited thereto. In a case where the first electrical conductor 5a includes two or more electrical conductors, the two or more electrical conductors may be independent of each other. In other words, the two or more electrical conductors included in the first electrical conductor 5a may not contact with each other or may not have the same potential.

Hereinafter, for ease of understanding of the interface sensor 2, the first electrical conductor 5a is a single electrical conductor in the example illustrated in FIG. 15. FIG. 15 explicitly illustrates a frame of the first electrical conductor 5a in view of clarity of the figure, and the first electrical conductor 5a is depicted as if the first electrical conductor 5a were transparent.

The k-th sensor block 3 among the K sensor blocks 3 includes M(k) second electrical conductors 5b and n(k) conducting lines 7. The second electrical conductor 5b will be described later. The n(k) conducting lines 7 are conducting lines drawn from the sensor block 3 and are connected to the M(k) second electrical conductors 5b as described later. The n(k) conducting lines 7 are connected to a detection circuit as described later. In FIG. 15, reference numerals are assigned to only some second electrical conductors and some conducting lines in view of clarity of the figure. k is a parameter for representing an integer that satisfies $1 \leq k \leq K$, that is, $k \in \{x \in N: 1 \leq x \leq K\}$. N is the set of all positive integers. For any $k \in \{x \in N: 1 \leq x \leq K\}$, n(k) is a predetermined integer satisfying $2 \leq n(k)$. For any $k \in \{x \in N: 1 \leq x \leq K\}$, M(k) is expressed as Formula (1). The symbol "x" represents multiplication. M(1), that is, the number of the second electrical conductors 5b included in the first sensor block 3 determines resolution of the interface sensor 2. In other words, M(1) matches a total number of "observation points" described above (this total number is represented by a symbol Z in the description of the prior art). While details will become clear from Formula (4) and Formula (5) as described later, M(1) = 4 or M(1) = 6 or M(1) $\geq$ 8 has to be satisfied so that the total number L of the conducting lines 7 to be drawn from the interface sensor 2 can be smaller than a sum of 1 and the total number M(1) of the observation points.

[Formula 9]

$$M(k) = \prod_{j=k}^{K} n(j) = n(K) \times \cdots \times n(k) \qquad (1)$$

In the design of the interface sensor 2, a value of M(1), which is related to the resolution of the interface sensor 2, is customarily determined first. In terms of this, n(k) is a positive divisor (except 1 and M(1)) of M(1). Thus, for any $k \in \{x \in N: 1 \leq x \leq K\}$, n(k) < M(1). Further, note that notation of M(1) is not unique. For example, if M(1) = 60, M(1) has two or more types of indications (that is, two or more types of factorization) such as:

$$M(1) = 2 \times 30 \text{ (that is, K = 2, n(1) = 30, n(2) = 2),}$$

$$M(1) = 3 \times 20 \text{ (that is, K = 2, n(1) = 20, n(2) = 3),}$$

$$M(1) = 12 \times 5 \text{ (that is, K = 2, n(1) = 5, n(2) = 12),}$$

$$M(1) = 4 \times 3 \times 5 \text{ (that is, K = 3, n(1) = 5, n(2) = 3, n(3) = 4),}$$

$$M(1) = 5 \times 6 \times 2 \text{ (that is, K = 3, n(1) = 2, n(2) = 6, n(3) = 5),}$$

and

$$M(1) = 2 \times 3 \times 2 \times 5 \text{ (that is, K = 4, n(1) = 5, n(2) = 2, n(3) = 3, n(4) = 2).}$$

In a case where M(1) has two or more types of indications, a person who implements the interface sensor 2 can freely select one type of indication in view of easiness of implementation of the interface sensor 2, manufacturing cost of the interface sensor 2, an environment in which the interface sensor 2 is used, and the like. In other words, two or more types of indications of M(1) mean a degree of freedom in the design of the interface sensor 2.

The second electrical conductor 5b is, for example, a metal. The second electrical conductor 5b may have a rectangular flat plate shape or a circular flat plate shape, although not limited thereto. In the k-th (k $\in$ {x $\in$ N: 1 $\leq$ x $\leq$ K}) sensor block 3, M(k) pairs of electrodes are formed between the first electrical conductor 5a and the M(k) second electrical conductors 5b. The M(k) pairs of electrodes have the same capacitance $C_k$ as each other in a state where the space between electrodes of each of the M(k) pairs of electrodes is filled with, for example, a first substance. In another respect, an area of the $m_k$-th second electrical conductor 5b among the M(k) second electrical conductors 5b included in the k-th (k $\in$ {x $\in$ N: 1 $\leq$ x $\leq$ K}) sensor block 3 and a distance between the $m_k$-th second electrical conductor 5b and the first electrical conductor 5a are appropriately set for the purpose of satisfying the condition that "the M(k) pairs of electrodes have the same capacitance $C_k$ as each other in a state where the space between electrodes of each of the M(k) pairs of electrodes is filled with, for example, the first substance". $m_k$ is a parameter for representing an integer that satisfies 1 $\leq$ $m_k$ $\leq$ M(k), that is, $m_k$ $\in$ {x $\in$ N: 1 $\leq$ x $\leq$ M(k)}. For example, in a case where the M(k) second electrical conductors 5b included in the k-th (k $\in$ {x $\in$ N: 1 $\leq$ x $\leq$ K}) sensor block 3 have the same area and distances between the first electrical conductor 5a and the M(k) second electrical conductors 5b are equal to each other, the above-described condition is satisfied. In the example illustrated in FIG. 15, a shape of the first electrical conductor 5a is a rectangular flat plate having an area larger than an area of one substrate 9 having K sensor blocks 3. In the example illustrated in FIG. 15, the K sensor blocks 3 are placed on one surface of one substrate 9, and the first electrical conductor 5a is placed in parallel to the one surface of the substrate 9 and faces the one surface of the substrate 9. In FIG. 15, in view of clarity, only an outline of the first electrical conductor 5a is illustrated by regarding the first electrical conductor 5a as a transparent object. When the interface sensor 2 is squarely viewed (that is, when a sheet of FIG. 15 is viewed from the front), the first electrical conductor 5a covers all the second electrical conductors 5b included in the K sensor blocks 3, and a distance between the frame of the first electrical conductor 5a and each second electrical conductor 5b is sufficiently large. In the example illustrated in FIG. 15, in a case where the M(k) second electrical conductors 5b included in the k-th (k $\in$ {x $\in$ N: 1 $\leq$ x $\leq$ K}) sensor block 3 have the same area, the above-described condition is easily satisfied. The capacitance $C_k$ of each of the M(k) pairs of electrodes included in the k-th sensor block 3 may be the same as or different from capacitance $C_j$ of each of M(j) pairs of electrodes included in the j-th (j $\neq$ k) sensor block 3.

The $m_k$-th second electrical conductor 5b among the M(k) second electrical conductors 5b included in the k-th (k $\in$ {x $\in$ N: 1 $\leq$ x $\leq$ K}) sensor block 3 is placed in the r(k, $m_k$)-th plane P(r(k, $m_k$)) among M(1) planes. As described above, $m_k$ is a parameter for representing an integer that satisfies 1 $\leq$ $m_k$ $\leq$ M(k), that is, $m_k$ $\in$ {x $\in$ N: 1 $\leq$ x $\leq$ M(k)}. For any k $\in$ {x $\in$ N: 1 $\leq$ x $\leq$ K} and for any $m_k$ $\in$ {x $\in$ N: 1 $\leq$ x $\leq$ M(k)}, r(k, $m_k$) is expressed by Formula (2). M(1) planes P(1), ..., P(M(1)) do not coincide with each other and are parallel to each other. The M(1) planes P(1), ..., P(M(1)) are arranged in space in order according to an order relation of elements of the set {x $\in$ N: 1 $\leq$ x $\leq$ M(1)} (that is, the order relation of natural numbers). Specifically, the q-th (q $\in$ {x $\in$ N: 2 $\leq$ x $\leq$ p-1}) plane P(q) exists between the first plane P(1) and the p-th (p $\in$ {x $\in$ N: 3 $\leq$ x $\leq$ M(1)}) plane P(p). Further, in a simple term, when a normal direction of M(1) planes P(1), ..., P(M(1)) parallel to each other is referred to as a first direction, M(1) planes P(1), ..., P(M(1)) are arranged in this order in the first direction. For any $g \in \{x \in N: 1 \leq x \leq M(1)\text{-}2\}$, and for any $h \in \{x \in N: g + 1 \leq x \leq M(1)\text{-}1\}$, a distance between the g-th plane P(g) and the (g+1)-th plane P(g+1) may be equal to or not equal to a distance between the h-th plane P(h) and the (h+1)-th plane P(h+1). For example, it is preferable to make narrower an interval between adjacent planes in a measurement range in which a position of the interface is desired to be more accurately located. In the k-th ($k \in \{x \in N: 1 \leq x \leq K\}$) sensor block 3, while the M(k) second electrical conductors 5b are customarily arranged in a straight line, the arrangement is not limited to this, and the M(k) second electrical conductors 5b may be, for example, arranged in a walking footprint shape.
[Formula 10]

$$r(k, m_k) = m_k \times \prod_{j=1}^{k} n(j-1) \qquad (2)$$

In terms of easiness of the design and easiness of manufacturing of the interface sensor 2, K sensor blocks 3 are customarily arranged in a second direction orthogonal to the first direction. A total number of possible arrangement patterns of the K sensor blocks 3 in the second direction is K!, that is, $\prod_{k=1}^{K} k$. Note that in a case where the first direction is a vertical direction, "plane" may be referred to as, for example, "level."

The $m_k$-th ($m_k \in \{x \in N: 1 \leq x \leq M(k)\}$) second electrical conductor 5b among the M(k) second electrical conductors 5b included in the k-th ($k \in \{x \in N: 1 \leq x \leq K\}$) sensor block 3 is connected to the $s(m_k)$-th conducting line 7 among n(k) conducting lines 7. The $m_k$-th ($m_k \in \{x \in N: 1 \leq x \leq M(k)\}$) second electrical conductor 5b and the $s(m_k)$-th conducting line 7 are connected to each other by way of a branch line 7x in this example. $s(m_k)$ is an integer that satisfies $1 \leq s(m_k) \leq n(k)$, that is, $s(m_k) \in \{x \in N: 1 \leq x \leq n(k)\}$. For any $k \in \{x \in N: 1 \leq x \leq K\}$ and for any $m_k \in \{x \in N: 1 \leq x \leq M(k)\}$, Formula (3) holds. In Formula (3), a symbol "mod" represents remainder calculation, $m_k$ mod n(k) is a remainder obtained by Euclidean division of a dividend $m_k$ by a divisor n(k).
[Formula 11]

$$s(m_k) = \begin{cases} m_k \bmod n(k) & (m_k \bmod n(k) \neq 0) \\ n(k) & (m_k \bmod n(k) = 0) \end{cases} \qquad (3)$$

As is clear from the description above, the number E of the second electrical conductors 5b included in the interface sensor 2 is given by Formula (4), and the number L of the conducting lines 7 to be drawn from the interface sensor 2 is given by Formula (5). Under the above-described conditions, L < M(1) + 1 can be achieved.

[Formula 12]

$$E = \sum_{k=1}^{K} M(k) = \sum_{k=1}^{K} \prod_{j=k}^{K} n(j) \qquad (4)$$

$$L = \sum_{k=1}^{K} (n(k) + 1) \qquad (5)$$

One example of a method for locating the position of the interface using the interface sensor 2 will be described next. In the k-th ($k \in \{x \in N: 1 \leq x \leq K\}$) sensor block 3, a detection circuit (not illustrated) compares a difference $D(t_k)$ with a predetermined threshold value $\delta$. The difference $D(t_k)$ is a difference between synthesis of physical quantities (for example, synthesized capacitance) produced in the $t_k$-th pair of electrodes (that is, a pair of electrodes formed by the second electrical conductors 5b connected to the $t_k$-th conducting line 7 and the first electrical conductor 5a) and synthesis of physical quantities (for example, synthesized capacitance) produced in the ($t_k$+1)-th pair of electrodes (that is, a pair of electrodes formed by the second electrical conductors 5b connected to the ($t_k$+1)-th conducting line 7 and the first electrical conductor 5a). $t_k$ is a parameter for representing an integer that satisfies $1 \leq t_k \leq n(k)\text{-}1$, that is, $t_k \in \{x \in N: 1 \leq x \leq n(k)\text{-}1\}$. As a result of the comparison, for example, when $D(T_k) > \delta$ for a certain $T_k \in \{x \in N: 1 \leq x \leq n(k)\text{-}1\}$, candidates for the position of the interface are given by b(k)+1 sections each determined by a pair of two planes expressed by Formula (6). When k = K, y = 0 is defined. One "section" is a region between two planes expressed by Formula (6). In a case where $D(t_k) \leq \delta$ for all $t_k$, the interface does not reach the plane P(1) or the interface exceeds the plane P(M(1)). Note that the detection circuit may be a component of the interface sensor 2 or a physical entity independent of the interface sensor 2. In the latter case, the detection circuit may be a component of the level gauge including the interface sensor 2. The detection circuit, without limitation, may be the detection circuit in the prior art, or may be a detection circuit including an AC signal generator for generating an AC signal to be applied to the n(k) conducting lines 7 for any k $\in$ {x $\in$ N: 1 $\leq$ x $\leq$ K} and a comparator for comparing the difference $D(t_k)$ with the threshold $\delta$ for any $t_k \in$ {x $\in$ N: 1 $\leq$ x $\leq$ n(k)-1}, or may be the detection circuit illustrated in FIGS. 2 and 6 (including the carrier wave generation circuit 50 and the discrimination means 90), or may be the detection circuit illustrated in FIG. 9 (including the charge circuit 130, the two or more switches to be controlled by the control means 110 and the discrimination means 90'), or may be the detection circuit illustrated in FIG. 12 (including the charge circuits 130 and 140, the two or more switches to be controlled by the control means 110 and the discrimination means 90'), or may be a detection circuit including a programmable logic device (PLD). Examples of the PLD include a field-programmable gate array (FPGA).

[Formula 13]

$$P\Big((T_k + y \times n(k)) \times \prod_{j=1}^{k} n(j-1)\Big), \ P\Big((T_k + 1 + y \times n(k)) \times \prod_{j=1}^{k} n(j-1)\Big) \quad (6)$$

$$y \in \{x \in N : 0 \leq x \leq b(k)\}, \quad b(k) = \Big(\prod_{j=k+1}^{K} n(j)\Big) - 1$$

As one example, the position of the interface can be located using an algorithm shown in Table 1. In other words, except a case where the interface does not reach the plane P(1) and a case where the interface exceeds the plane P(M(1)), a common section common to each sensor block 3 is identified as a section in which the interface exists. In the algorithm shown in Table 1, it is assumed that there exists $T_k \in$ {x $\in$ N: 1 $\leq$ x $\leq$ n(K)-1 } satisfying $D(T_K) > \delta$ in the K-th sensor block 3. For example, in a case where K' is an integer that satisfies 1 < K' < K, and $T_{K'+1} \in$ {x $\in$ N: 1 $\leq$ x $\leq$ n(K'+1)-1} satisfying $D(T_{K'+1}) > \delta$ does not exist in the (K'+1)-th sensor block 3, and $T_{K'} \in$ {x $\in$ N: 1 $\leq$ x $\leq$ n(K')-1} satisfying $D(T_{K'}) > \delta$ exists in the K'-th sensor block 3, it is only necessary to replace K with K' in the algorithm shown in Table 1. When K' = 1, the interface exists in a section corresponding to y = 0 among b(1)+1 sections each determined by a pair of two planes expressed by Formula (6).

[Table 1]

$$upper = (T_K + 1) \times \prod_{j=1}^{K} n(j-1)$$

$$lower = T_K \times \prod_{j=1}^{K} n(j-1)$$

$$\textbf{for } k = K - 1 \textbf{ to } 1 \textbf{ (step} : -1)$$

$$b(k) = \left( \prod_{j=k+1}^{K} n(j) \right) - 1, \qquad r(k) = \prod_{j=1}^{k} n(j-1)$$

$$\textbf{for } y = 0 \textbf{ to } b(k) \textbf{ (step} : +1)$$

$$\textbf{if } ((T_k + y \times n(k)) \times r(k) > lower \textbf{ and}$$

$$(T_k + 1 + y \times n(k)) \times r(k) < upper) \textbf{ then}$$

$$upper = (T_k + 1 + y \times n(k)) \times r(k)$$

$$lower = (T_k + y \times n(k)) \times r(k)$$

$$\textbf{goto G} :$$

$$\textbf{end if}$$

$$\textbf{next } y$$

$$\textbf{G} :$$

$$\textbf{next } k$$

$$\textbf{output} : \ P(lower), \ P(upper)$$

The interface sensor 2 may include the second electrical conductor 5b for determining that the interface does not reach the plane P(1) and/or the second electrical conductor 5b for determining that the interface exceeds the plane P(M(1)). It can be known that the interface does not reach the plane P(1) when $D(t_k) \leq \delta$ for all $t_k$ in the first sensor block 3, and thus, the former second electrical conductor 5b is not essential.

A specific configuration example of the interface sensor 2 is illustrated in FIG. 15. The configuration example illustrated in FIG. 15 is an example in a case where M(1) = 30, and K = 3. In the example illustrated in FIG. 15, M(1) = 2 × 5 × 3 is employed as factorization based on three factors of M(1). In other words, n(1) = 3, n(2) = 5, and n(3) = 2. Thus, from Formula (1), M(1) = 30, M(2) = 10, and M(3) = 2.

The $m_1$-th ($m_1 \in \{x \in N: 1 \leq x \leq 30\}$) second electrical conductor 5b among 30 second electrical conductors 5b included in the first sensor block 3 is placed in the $r(1, m_1)$-th plane $P(r(1, m_1)$) among 30 planes. Here, from Formula (2), $r(1, m_1) = m_1$. In short, the p-th ($p \in \{x \in N: 1 \leq x \leq 30\}$) second electrical conductor 5b included in the first sensor block 3 is placed in the p-th plane P(p).

The $m_2$-th ($m_2 \in \{x \in N: 1 \leq x \leq 10\}$) second electrical conductor 5b among 10 second electrical conductors 5b included in the second sensor block 3 is placed in the $r(2, m_2)$-th plane $P(r(2, m_2))$ among 30 planes. Here, from Formula (2), $r(2, m_2) = 3 \times m_2$. In short, the p-th ($p \in \{x \in N: 1 \leq x \leq 10\}$) second electrical conductor 5b included in the second sensor block 3 is placed in the (3×p)-th plane P(3×p). For example, the seventh ($p = 7 \in \{x \in N: 1 \leq x \leq 10\}$) second electrical conductor 5b included in the second sensor block 3 is placed in the 21st plane P(21).

The $m_3$-th ($m_3 \in \{x \in N: 1 \leq x \leq 2\}$) second electrical conductor 5b among two second electrical conductors 5b included in the third sensor block 3 is placed in the $r(3, m_3)$-th plane $P(r(3, m_3))$ among 30 planes. Here, from Formula (2), $r(3, m_3) = 15 \times m_3$. In short, the p-th ($p \in \{x \in N: 1 \leq x \leq 2\}$) second electrical conductor 5b included in the third sensor block 3 is placed in the (15×p)-th plane P(15×p). For example, the first ($p = 1 \in \{x \in N: 1 \leq x \leq 2\}$) second electrical conductor 5b included in the third sensor block 3 is placed in the 15th plane P(15).

The $m_1$-th ($m_1 \in \{x \in N: 1 \leq x \leq 30\}$) second electrical conductor 5b among 30 second electrical conductors 5b included in the first sensor block 3 is connected to the $s(m_1)$-th conducting line 7 among three conducting lines 7. From Formula (3), for example, the seventh second electrical conductor 5b is connected to the first conducting line 7 (7 mod 3 = 1), the 17th second electrical conductor 5b is connected to the second conducting line 7 (17 mod 3 = 2), and the 24th second electrical conductor 5b is connected to the third conducting line 7 (24 mod 3 = 0).

The $m_2$-th ($m_2 \in \{x \in N: 1 \leq x \leq 10\}$) second electrical conductor 5b among 10 second electrical conductors 5b included in the second sensor block 3 is connected to the $s(m_2)$-th conducting line 7 among 5 conducting lines 7. From Formula (3), the first and the sixth second electrical conductors 5b are connected to the first conducting line 7 (1 mod 5 = 6 mod 5 = 1), the second and the seventh second electrical conductors 5b are connected to the second conducting line 7 (2 mod 5 = 7 mod 5 = 2), and the third and the eighth second electrical conductors 5b are connected to the third conducting line 7 (3 mod 5 = 8 mod 5 = 3), the fourth and the ninth second electrical conductors 5b are connected to the fourth conducting line 7 (4 mod 5 = 9 mod 5 = 4), and the fifth and the tenth second electrical conductors 5b are connected to the fifth conducting line 7 (5 mod 5 = 10 mod 5 = 0).

The $m_3$-th ($m_3 \in \{x \in N: 1 \leq x \leq 2\}$) second electrical conductor 5b among 2 second electrical conductors 5b included in the third sensor block 3 is connected to the $s(m_3)$-th conducting line 7 among 2 conducting lines 7. From Formula (3), the 1st second electrical conductor 5b is connected to the first conducting line 7 (1 mod 2 = 1), and the 2nd second electrical conductor 5b is connected to the second conducting line 7 (2 mod 2 = 0).

The number E of the second electrical conductors 5b included in the configuration example of the interface sensor 2 illustrated in FIG. 15 is 42 from Formula (4), and the number L of the conducting lines 7 is 10 from Formula (5). The total number M(1) of the observation points is 30, and thus, L < M(1) + 1 is satisfied. Note that according to the water gauge in the prior art illustrated in FIG. 1, the number of conducting lines is 31 (= M(1) + 1). Further, for example, while not illustrated, in a case where M(1) = 1440, K = 5, n(1) = 5, n(2) = 3, n(3) = 2, n(4) = 8, and n(5) = 6, the number L of the conducting lines 7 in the interface sensor 2 is 24, and according to the water gauge in the prior art illustrated in FIG. 1, the number of conducting lines is 1441 (= M(1) + 1).

In the example illustrated in FIG. 15, the number F of the substrates 9 is 1. However, F may be 2 or 3. When F = 2, for example, the first sensor block 3 and the second sensor block 3 are formed on the first substrate, and the third sensor block 3 is formed on the second substrate.

The interface sensor 200 herein disclosed will be described next. While the interface sensor 2 includes K sensor blocks 3, the interface sensor 200 includes one sensor block 300 and has a configuration equivalent to the configuration of the interface sensor 2.

The interface sensor 200 is a sensor for locating the position of the interface between two types of substances (that is, the first substance and the second substance different from each other). However, to accurately locate the position, the number of interfaces has to be 1 or 0 in a range from the plane P(1) to the plane P(E) as described later. As described later, the interface sensor 200 includes a first electrical conductor 500a and E second electrical conductors 500b (E is expressed in Formula (7) later). E pairs of electrodes are formed between the first electrical conductor 500a and the E second electrical conductors 500b. The position of the interface between the first substance and the second substance is located by using physical quantities produced in each of the E pairs of electrodes, corresponding to a property of the first substance or second substance present between electrodes of each of the E pairs of electrodes. The "interface" and the "homogeneous phase" are as described above. A typical example of the interface sensor 200 is a sensor for locating the position of the interface between a liquid (for example, water) as the first substance and a gas (for example, air) as the second substance.

A configuration of the interface sensor 200 will be described. Symbols appearing in the following description are unrelated to symbols used in the description in the embodiments described above or the description of the interface sensor 2. Further, RC=$\epsilon\rho$ holds, where C is capacitance between two conductors with equal positive and negative charges, R is electrical resistance between the two conductors, $\epsilon$ is dielectric constant of a medium between the two conductors, and $\rho$ is electrical resistivity of the medium between the two conductors. Thus, only capacitance of the pair of electrodes will be described below, and description of electric resistivity of the pair of electrodes will be omitted.

The interface sensor 200 includes the first electrical conductor 500a, E second electrical conductors 500b, L conducting lines 700 to be drawn from the sensor block 300 and a conducting line selector 800. Customarily, the E second electrical conductors 500b and the L conducting lines 700 are formed on a substrate 900 having a plate shape. Waterproof coating is applied to the substrate 900 except the E second electrical conductors 500b. The conducting line selector 800 may be formed on the substrate 900 or may be formed on other substrates, although not limited thereto. In a case where the first substance is a liquid, the conducting line selector 800 is preferably located at a position not soaking in the liquid, and in a case where the conducting line selector 800 is located at a position soaked in the liquid, waterproofing is applied.

The first electrical conductor 500a is, for example, a metal. The first electrical conductor 500a may be one electrical conductor or may include two or more electrical conductors.

In a case where the first electrical conductor 500a is a single electrical conductor, the first electrical conductor 500a may have a flat plate or a cylindrical shape, although not limited thereto. In a case where the first electrical conductor 500a has a cylindrical shape, a cross-sectional shape of the cylinder in a cross-section perpendicular to a longitudinal direction of the cylinder is, for example, a circle or a rectangle. In a case where the first electrical conductor 500a has a cylindrical shape, the sensor block 300 is customarily arranged inside the first electrical conductor 500a, but the arrangement is not limited to this.

In a case where the first electrical conductor 500a includes two or more electrical conductors, each of the electrical conductors included in the first electrical conductor 500a may have a flat plate or a shape of each component constituting the above-described cylinder (for example, a shape of an object obtained by cutting the above-described cylinder in a direction perpendicular to the longitudinal direction of the cylinder (in short, it is a cylinder shorter than the above-described cylinder) or a shape of an object obtained by cutting the above-described cylinder in the longitudinal direction of the cylinder (for example, in a case of a cylinder, it is a 1/4 cylindrical shape)), although not limited thereto. In a case where the first electrical conductor 500a includes two or more electrical conductors, the two or more electrical conductors may be independent of each other. However, the two or more electrical conductors included in the first electrical conductor 500a preferably have the same potential to each other, for example, by having contact with each other.

Hereinafter, for ease of understanding of the interface sensor 200, the first electrical conductor 500a is a single electrical conductor in a first example illustrated in FIG. 16 and in a second example illustrated in FIG. 17. FIGS. 16 and 17 explicitly illustrate a frame of the first electrical conductor 005a in view of clarity of the figure, and the first electrical conductor 500a is depicted as if the first electrical conductor 500a were transparent.

The sensor block 300 includes E second electrical conductors 500b and L conducting lines 700. The second electrical conductor 500b will be described later. The L conducting lines 700 are drawn from the sensor block 300 and connected to the conducting line selector 800 as described later. In FIGS. 16 and 17, reference numerals are assigned to only some second electrical conductors and some conducting lines in view of clarity of the figure. E is expressed by Formula (7). L is expressed by Formula (8). K is a predetermined integer which satisfies $2 \leq K$. j is a parameter for representing an integer that satisfies $1 \leq j \leq K$, that is, $j \in \{x \in N: 1 \leq x \leq K\}$. For any $j \in \{x \in N: 1 \leq x \leq K\}$, n(j) is a predetermined integer which satisfies $2 \leq n(j)$. N is a set of all positive integers. E, that is, the number of the second electrical conductors 500b included in the sensor block 300 determines resolution of the interface sensor 200. In other words, E matches the total number of the "observation points" described above (this total number is represented by a symbol Z in description of the prior art). Under the above-described conditions, L < E + 1 can be achieved.

[Formula 14]

$$E = \prod_{j=1}^{K} n(j) \tag{7}$$

$$L = \sum_{j=1}^{K} \Big( n(j) - 1 \Big) + 2 \tag{8}$$

n(j) is a positive divisor of E (except 1 and E). Notation of E is not unique. In a case where E has two or more types of notation (that is, two or more ways of factorization), a person who implements the interface sensor 200 can freely select one type of notation in view of easiness of implementation of the interface sensor 200, manufacturing cost of the interface sensor 200, an environment in which the interface sensor 200 is used, and the like. In other words, two or more types of notation of E mean a degree of freedom in the design of the interface sensor 200. In terms of reduction in the total number L of the conducting lines 700, n(j) is preferably a prime factor of E, that is, a right side of Formula (7) is preferably factorization into prime factors (see Formula (8)).

The second electrical conductor 500b is, for example, a metal. The second electrical conductor 500b may have a rectangular flat plate shape or a circular flat plate shape, although not limited thereto. In the sensor block 300, E pairs of electrodes are formed between the first electrical conductor 500a and the E second electrical conductors 500b. The E pairs of electrodes have the same capacitance C as each other in a state where the space between electrodes of each of the E pairs of electrodes is filled with, for example, the first substance. In another respect, an area of the m-th second electrical conductor 500b among the E second electrical conductors 5b included in the sensor block 300 and a distance between the m-th second electrical conductor 500b and the first electrical conductor 500a are appropriately set for the purpose of satisfying the condition that "the E pairs of electrodes have the same capacitance C as each other in a state where the space between electrodes of each of the E pairs of electrodes is filled with, for example, the first substance". m is a parameter for representing an integer that satisfies $1 \leq m \leq E$, that is, $m \in \{x \in N: 1 \leq x \leq E\}$. For example, in a case where the E second electrical conductors 500b included in the sensor block 300 have the same area and distances between the first electrical conductor 500a and the E second electrical conductors 500b are equal to each other, the above-described condition is satisfied. In the first example illustrated in FIG. 16 and the second example illustrated in FIG. 17, a shape of the first electrical conductor 500a is a rectangular flat plate having an area larger than an area of the substrate 900. In the first example illustrated in FIG. 16 and the second example illustrated in FIG. 17, the sensor block 300 is placed on one surface of the substrate 900, and the first electrical conductor 500a is placed in parallel to the one surface of the substrate 900 and faces the one surface of the substrate 900. In FIGS. 16 and 17, in view of clarity, only an outline of the first electrical conductor 500a is illustrated by regarding the first electrical conductor 500a as a transparent object. When the interface sensor 200 is squarely viewed (that is, when a sheet of FIG. 16 or 17 is viewed from the front), the first electrical conductor 500a covers all the second electrical conductors 500b included in the sensor block 300, and a distance between the frame of the first electrical conductor 500a and each second electrical conductor 500b is sufficiently large. In the first example illustrated in FIG. 16 and the second example illustrated in FIG. 17, in a case where the E second electrical conductors 500b included in the sensor block 300 have the same area, the above-described condition is easily satisfied.

The E second electrical conductors 500b are placed in E planes, which do not coincide with each other and which are parallel to each other, in order according to an order relation of elements of a set $\{x \in N: 1 \le x \le E\}$. The E planes P(1), ..., P(E) are arranged in space in order according to an order relation of elements of the set $\{x \in N: 1 \le x \le E\}$ (that is, the order relation of natural numbers). Specifically, the $p_b$-th ($p_b \in \{x \in N: 2 \le x \le p_a-1\}$) plane $P(p_b)$ exists between the first plane P(1) and the $p_a$-th ($p_a \in \{x \in N: 3 \le x \le E\}$) plane $P(p_a)$. Further, in a simple term, when a normal direction of the E planes P(1), ..., P(E) parallel to each other is referred to as a first direction, the E planes P(1), ..., P(E) are arranged in this order in the first direction. For any $g \in \{x \in N: 1 \le x \le E-2\}$ and for any $h \in \{x \in N: g+1 \le x \le E-1\}$, a distance between the g-th plane P(g) and the (g+1)-th plane P(g+1) may be equal to or not equal to a distance between the h-th plane P(h) and the (h+1)-th plane P(h+1). For example, it is preferable to make narrower an interval between adjacent planes in a measurement range in which the position of the interface is desired to be more accurately located. The p-th second electrical conductor 500b among the E second electrical conductors 500b is placed in the p-th plane P(p) among the E planes. p is a parameter for representing an integer that satisfies $1 \le p \le E$, that is, $p \in \{x \in N: 1 \le x \le E\}$. The E second electrical conductors 500b are customarily arranged in a straight line, but the arrangement is not limited to this, and the E second electrical conductors 500b may be, for example, arranged in a walking footprint shape. Note that in a case where the first direction is a vertical direction, "plane" may be referred to as, for example, "level."

For any $p \in \{x \in N: 1 \le x \le E-1\}$, the p-th second electrical conductor 500b among the E second electrical conductors 500b is connected to the s(p)-th conducting line 700 among the L conducting lines 700. The p-th ($p \in \{x \in N: 1 \le x \le E-1\}$) second electrical conductor 500b and the s(p)-th conducting line 700 are connected to each other by way of a branch line 700x in this example. s(p) is expressed by Formula (9). In Formula (9), a symbol "mod" represents remainder calculation, and a mod b is a remainder obtained by Euclidean division of a dividend a by a divisor b. In Formula (9), a symbol "/" appearing in the dividend in the remainder calculation represents division. In the description, n(0) = 1.

[Formula 15]

$$s(p) = \left( p \Big/ \prod_{j=1}^{r} n(j-1) \right) \bmod n(r) + \sum_{j=1}^{r} \Big( n(j-1) - 1 \Big) \qquad (9)$$

In Formula (9), r is specified by $p \in W(r)$, in other words, r is specified by a set W(r) to which p belongs. For any $k \in \{x \in N: 1 \le x \le K\}$, the k-th set W(k) is expressed by Formula (10). The (K+1)-th set W(K+1) is an empty set $\phi$. In Formula (10), a symbol "|" represents a multiple, that is, a|b represents that "b is a multiple of a".

[Formula 16]

$$W(k) = \left\{ x \in N : 1 \le x \le E \ \wedge \ \left( \prod_{j=1}^{k} n(j-1) \right) \Big| x \right\} - \bigcup_{j=k}^{K} W(j+1) \qquad (10)$$

When $W = \{W(j): j \in N \wedge 1 \le j \le K\}$ is defined, as is clear from Formula (10), the following holds.

$$(1) \ \forall \ W(j) \in W, \ W(j) \neq \phi$$

$$(2) \ W(i) \in W, \ W(j) \in W, \ W(i) \neq W(j) \Rightarrow W(i) \cap W(j) = \phi$$

$$(3) \ \cup_{j=1}^{K} W(j) = \{x \in N: 1 \le x \le E\}$$

Thus, $\forall p \in \{x \in N: 1 \le x \le E-1\}$, $\exists! W(r) \in W$ s.t. $p \in W(r)$. In other words, the set W(r) to which p belongs is uniquely determined.

The E-th second electrical conductor 500b among the E second electrical conductors 500b is connected to the L-th conducting line 700 among the L conducting lines 700.

The conducting line selector 800 can select any one conducting line 700 among the L conducting lines 700.

Alternatively, for any $k \in \{x \in N: 1 \le x \le K\}$, the conducting line selector 800 selects:

(1) in a case where k ≠ K and n(k) ≠ 2,

for any y ∈ {x ∈ N: 1 ≤ x ≤ n(k)-2}, two conducting lines 700 determined by elements belonging to a set Y(y), among the L conducting lines 700, at the same time, and
for y = n(k)-1, (2+$\Sigma_{j=k+1}^{K}$(n(j)-1)) conducting lines 700 determined by elements belonging to a set $Y_a$(y), among the L conducting lines 700, at the same time,

(2) in a case where k ≠ K and n(k) = 2,
for y = n(k)-1, (2+$\Sigma_{j=k+1}^{K}$(n(j)-1)) conducting lines 700 determined by elements belonging to the set $Y_a$(y), among the L conducting lines 700, at the same time, and
(3) in a case where k = K,
for any y ∈ {x ∈ N: 1 ≤ x ≤ n(k)-1}, two conducting lines 700 determined by elements belonging to a set Y(y), among the L conducting lines 700, at the same time.

The set Y(y) is expressed by Formula (11), and the set $Y_a$(y) is expressed by Formula (12). These sets are expressed as sum sets of singletons.

[Formula 17]

$$Y(y) = \bigcup_{z=y}^{y+1} \left\{ \sum_{j=1}^{k} \left( n(j-1)-1 \right) + z \right\} \tag{11}$$

$$Y_a(y) = \left\{ \sum_{j=1}^{k} \left( n(j-1)-1 \right) + y \right\} \bigcup \bigcup_{m=k+1}^{K} \bigcup_{z=1}^{n(m)-1} \left\{ \sum_{j=1}^{m} \left( n(j-1)-1 \right) + z \right\} \bigcup \left\{ L-1 \right\} \tag{12}$$

In a case where the interface sensor 200 includes the conducting line selector 800 configured to select two or more conducting lines 700 at the same time in this manner, the conducting line selector 800 preferably connects the two or more conducting lines 700 selected at the same time to two conducting lines (a conducting line a and a conducting line b) as follows. (A) Regarding Formula (11), the conducting line 700 determined by the elements belonging to the set expressed by Formula (13) is connected to the conducting line a, and the conducting line 700 determined by the elements belonging to the set expressed by Formula (14) is connected to the conducting line b. (B) Regarding Formula (12), the conducting line 700 determined by the elements belonging to the set expressed by Formula (13) is connected to the conducting line a, and the conducting line 700 determined by the elements belonging to the set expressed by Formula (15) is connected to the conducting line b.

[Formula 18]

$$\left\{ \sum_{j=1}^{k} \left( n(j-1)-1 \right) + y \right\} \tag{13}$$

$$\left\{ \sum_{j=1}^{k} \left( n(j-1)-1 \right) + y + 1 \right\} \tag{14}$$

$$\bigcup_{m=k+1}^{K} \bigcup_{z=1}^{n(m)-1} \left\{ \sum_{j=1}^{m} \left( n(j-1)-1 \right) + z \right\} \bigcup \left\{ L-1 \right\} \tag{15}$$

The interface sensor 200 is equivalent to the interface sensor 2, and thus, a method for locating the position of the interface using the interface sensor 200 is the same as a method for locating the position of the interface using the interface sensor 2. In a case where the interface sensor 200 includes the conducting line selector 800 configured to select two or more conducting lines 700 at the same time, in the interface sensor 200, a detection circuit (not illustrated) compares a difference D with the predefined threshold δ. The difference D is a difference between combination of physical quantities (for example, total capacitance) produced in respective pairs of electrodes connected to the conducting line a through the conducting line 700 selected by the conducting line selector 800 and combination of physical quantities (for example, total capacitance) produced in respective pairs of electrodes connected to the conducting line b through the conducting line 700 selected by the conducting line selector 800. Note that the detection circuit may be a component of the interface sensor 200 or may be a physical entity independent of the interface sensor 200. In the latter case, the detection circuit may be a component of a level gauge including the interface sensor 200. The detection circuit, without limitation, may be the detection circuit in the prior art, or may be a detection circuit including an AC signal generator that generates an AC signal to be applied to the L conducting lines 700 and a comparator, or may be the detection circuit illustrated in FIGS. 2 and 6 (including the carrier wave generation circuit 50 and the discrimination means 90), or may be the detection circuit illustrated in FIG. 9 (including the charge circuit 130, the plurality of switches to be controlled by the control means 110 and the discrimination means 90'), or may be the detection circuit illustrated in FIG. 12 (including the charge circuits 130 and 140, the plurality of switches to be controlled by the control means 110 and the discrimination means 90'), or may be a detection circuit including a programmable logic device (PLD). Examples of the PLD include a field-programmable gate array (FPGA).

As one example, the position of the interface can be located using an algorithm shown in Table 2. In this algorithm, $C(13)$ represents combination of physical quantities (for example, total capacitance) produced in respective pairs of electrodes connected to the conducting line 700 determined by the elements belonging to the set expressed by Formula (13), $C(14)$ represents combination of physical quantities (for example, total capacitance) produced in respective pairs of electrodes connected to the conducting line 700 determined by the elements belonging to the set expressed by Formula (14), and $C(15)$ represents combination of physical quantities (for example, total capacitance) produced in respective pairs of electrodes connected to the conducting line 700 determined by the elements belonging to the set expressed by Formula (15). Outputs $P(0)$ and $P(1)$ indicate that the interface does not reach the plane $P(1)$. Note that in this algorithm, overflow determination processing and error avoidance processing are not performed.

[Table 2]

$$U = E, \ L = 0$$

$$\textbf{for } k = K \textbf{ to } 1 \textbf{ (step} : \ -1)$$

$$r(k) = \prod_{j=1}^{k} n(j-1)$$

$$\textbf{if } k = K \textbf{ then } b(k) = 0 \textbf{ else } b(k) = \left( \prod_{j=k+1}^{K} n(j) \right) - 1$$

$$\textbf{for } y = 1 \textbf{ to } n(k) - 1 \textbf{ (step} : \ +1)$$

$$\textbf{if } (k = K) \textbf{ or } (k \neq K \textbf{ and } y < n(k) - 1) \textbf{ then } s = |c(14) - c(13)|$$

$$\textbf{if } k \neq K \textbf{ and } y = n(k) - 1 \textbf{ then } s = |c(15) - c(13)|$$

$$\textbf{if } s \geq \delta \textbf{ then}$$

$$\textbf{for } t = 0 \textbf{ to } b(k) \textbf{ (step} : \ +1)$$

$$\textbf{if } (y + t \times n(k)) \times r(k) \geq L \textbf{ and } (y + 1 + t \times n(k)) \times r(k) \leq U \textbf{ then}$$

$$\textbf{if } (y + t \times n(k)) \times r(k) > L \textbf{ then } L = (y + t \times n(k)) \times r(k)$$

$$\textbf{if } (y + 1 + t \times n(k)) \times r(k) < U \textbf{ then } U = (y + 1 + t \times n(k)) \times r(k)$$

$$\textbf{goto G}$$

$$\textbf{end if}$$

$$\textbf{next } t$$

$$\textbf{end if}$$

$$\textbf{next } y$$

$$U = L + \prod_{j=1}^{k} n(j-1)$$

$$\textbf{G:}$$

$$\textbf{next } k$$

$$\textbf{output} : \ P(L), \ P(U)$$

In a case where the total number Z of the "observation points" described above is a prime equal to or greater than 5, Z-1 is the number of syntheses. Thus, by setting the value of E as Z-1, the interface sensor can be configured to have Z (where Z is a prime equal to or greater than 5) observation points. Specifically, the interface sensor has a configuration in which one second electrical conductor and one conducting line are added to the interface sensor 200 including E (where E = Z - 1) second electrical conductors 500b, L conducting lines 700 and the conducting line selector 800. In this configuration, the added one second electrical conductor is placed in the P(E+1)-th plane, and the added one second electrical conductor is connected to the added one conducting line. When the detection circuit determines whether a capacitance value between the added one second electrical conductor and the first electrical conductor 500a exceeds a predetermined reference value, whether the interface exceeds the P(E+1)-th plane can be determined.

A first example and a second example that are specific configuration examples of the interface sensor 200 are illustrated in FIGS. 16 and 17 respectively. These configuration examples are examples where E = 30, and K = 3. In each of the examples illustrated in FIGS. 16 and 17, E = 2 × 5 × 3 is employed as factorization based on three factors of E. In other words, n(1) = 3, n(2) = 5, and n(3) = 2. In this case, L = 8. See Formula (7) and Formula (8) for these facts.

As illustrated in FIG. 16 and FIG. 17, the p-th (p $\in$ {x $\in$ N: 1 $\leq$ x $\leq$ 30}) pair of electrodes 500 is placed in the p-th plane P(p).

From Formula (10), W(3), W(2) and W(1) are determined as follows:

$$W(3) = \{15, 30\}$$

$$W(2) = \{3, 6, 9, 12, 18, 21, 24, 27\}$$

$$W(1) = \{1, 2, 4, 5, 7, 8, 10, 11, 13, 14, 16, 17, 19, 20, 22, 23, 25, 26, 28, 29\}$$

For example, if p = 12, we obtain p $\in$ W(2), that is, r = 2. Thus, from Formula (9), s(p) = 6, and the 12th (= p-th) second electrical conductor 500b is connected to the sixth (= s(p)-th) conducting line 700. All calculation results are as follows:

$$p \in \{1, 4, 7, 10, 13, 16, 19, 22, 25, 28\} \rightarrow s(p) = 1,$$

$$p \in \{2, 5, 8, 11, 14, 17, 20, 23, 26, 29\} \rightarrow s(p) = 2,$$

$$p \in \{3, 18\} \rightarrow s(p) = 3,$$

$$p \in \{6, 21\} \rightarrow s(p) = 4,$$

$$p \in \{9, 24\} \rightarrow s(p) = 5,$$

$$p \in \{12, 27\} \rightarrow s(p) = 6,$$

and

$$p \in \{15\} \rightarrow s(p) = 7.$$

The 30th (= E-th) second electrical conductor 500b is connected to the eighth (= L-th) conducting line 700.

The interface sensor 200 illustrated in FIG. 16 includes the conducting line selector 800 configured to select any one conducting line 700 among the L conducting lines 700. Such a conducting line selector 800 includes L single-pole-single-throw switches, although not limited thereto. One end of each of the L single-pole-single-throw switches is connected to the corresponding conducting line 700 among the L conducting lines 700. The other end of each of the L single-pole-single-throw switches is connected to a C/V converter, although not limited thereto. In a case where a value of L is not great, the conducting line selector 800 may be a single-pole-L-throw switch. In a case where the conducting line selector 800 is a single-pole-L-throw switch, the number of the C/V converter to be connected to the conducting line selector 800 may be one.

The interface sensor 200 illustrated in FIG. 17 includes the conducting line selector 800 configured to select two or more conducting lines 700 at the same time. Such a conducting line selector 800 includes L single-pole-triple-throw switches, although not limited thereto. An input terminal of each of the single-pole-triple-throw switches is connected to the corresponding conducting line 700 among the L conducting lines 700. A first output terminal of the single-pole-triple-throw switch is connected to the conducting line b, a second output terminal is terminated, and third output terminal is connected to the conducting line a. The conducting line a and the conducting line b are connected to the comparator, although not limited thereto. In this configuration example, the conducting line selector 800 connects two or more conducting lines 700 selected at the same time to the conducting line a and the conducting line b as follows.

The conducting line selector 800 performs the following selection operation in the configuration illustrated in FIG. 17.

In a case where k = 1, from n(k) = 3, and Formula (11) and Formula (12),

$$Y(1) = \{1\} \cup \{2\},$$

and

$$Y_a = \{2\} \cup \{3, 4, 5, 6, 7, 8\}$$

are obtained.

Thus, in a case where y = 1, the conducting line selector 800 selects the third output terminal of the single-pole-triple-throw switch connected to the first conducting line 700, selects the first output terminal of the single-pole-triple-throw switch connected to the second conducting line 700, and selects the second output terminal of each of the single-pole-triple-throw switches connected to the third to the eighth conducting lines 700, thereby selects the first conducting line 700 and the second conducting line 700 at the same time. In a case where y = 2, the conducting line selector 800 selects the second output terminal of the single-pole-triple-throw switch connected to the first conducting line 700, selects the third output terminal of the single-pole-triple-throw switch connected to the second conducting line 700, and selects the first output terminal of each of the single-pole-triple-throw switches connected to the third to the eighth conducting lines 700, thereby selects the second to the eighth conducting lines 700 at the same time.

In a case where k = 2, from n(k) = 5, and Formula (11) and Formula (12),

$$Y(1) = \{3\} \cup \{4\},$$

$$Y(2) = \{4\} \cup \{5\},$$

$$Y(3) = \{5\} \cup \{6\},$$

and

$$Y_a = \{6\} \cup \{7, 8\}$$

are obtained.

Thus, in a case where y = 1, the conducting line selector 800 selects the third output terminal of the single-pole-triple-throw switch connected to the third conducting line 700, selects the first output terminal of the single-pole-triple-throw switch connected to the fourth conducting line 700, and selects the second output terminal of each of the single-pole-triple-throw switches connected to the first, the second and the fifth to the eighth conducting lines 700, thereby selects the third conducting line 700 and the fourth conducting line 700 at the same time.

In a case where y = 2, the conducting line selector 800 selects the third output terminal of the single-pole-triple-throw switch connected to the fourth conducting line 700, selects the first output terminal of the single-pole-triple-throw switch connected to the fifth conducting line 700, and selects the second output terminal of each of the single-pole-triple-throw switches connected to the first to the third, and the sixth to the eighth conducting lines 700, thereby selects the fourth conducting line 700 and the fifth conducting line 700 at the same time.

In a case where y = 3, the conducting line selector 800 selects the third output terminal of the single-pole-triple-throw switch connected to the fifth conducting line 700, selects the first output terminal of the single-pole-triple-throw switch connected to the sixth conducting line 700, and selects the second output terminal of each of the single-pole-triple-throw switches connected to the first to the fourth, the seventh and the eighth conducting lines 700, thereby selects the fifth conducting line 700 and the sixth conducting line 700 at the same time.

In a case where y = 4, the conducting line selector 800 selects the second output terminal of the single-pole-triple-throw switch connected to the first to the fifth conducting lines 700, selects the third output terminal of the single-pole-triple-throw switch connected to the sixth conducting line 700, and selects the first output terminal of each of the single-pole-triple-throw switches connected to the seventh and the eighth conducting lines 700, thereby selects the sixth to the eighth conducting lines 700 at the same time. In a case where k = 3, from n(k) = 2 and Formula (11),

$$Y(1) = \{7\} \cup \{8\}$$

is obtained.

Thus, in a case where y = 1, the conducting line selector 800 selects the second output terminal of the single-pole-triple-throw switch connected to the first to the sixth conducting lines 700, selects the third output terminal of the single-pole-triple-throw switch connected to the seventh conducting line 700, and selects the first output terminal of each of the single-pole-triple-throw switches connected to the eighth conducting line 700, thereby selects the seventh conducting line 700 and the eighth conducting line 700 at the same time.

A controller that controls operation of the conducting line selector 800 is well known, and thus, illustration and description of the controller are omitted.

The level gauge herein disclosed includes the interface sensor 200 described above, the first substance is a liquid, and the second substance is a gas. In the level gauge, the first direction is preferably a vertical direction, but is not limited to this.

<Supplement>

The examples illustrated in FIGS. 2 to 14 indicate a level gauge in which E is expressed by a power-of-two, and one second electrical conductor among E second electrical conductors is a pair of electrodes having a predetermined capacitance for improving accuracy.

<Addendum>

The present invention has been described with reference to the example embodiments. It will be understood that a person skilled in the art can make various changes and replace the elements with equivalents without deviating from the scope of the present invention. Further, to adapt a specific system, device or components thereof to teaching of the present invention, many modifications can be made without deviating from the essential scope of the present invention. Thus, the present invention is not limited to the specific embodiments disclosed for implementing the present invention and includes all embodiments included in the accompanying claims.

Further, terms such as "first" and "second" are used not to indicate order or importance but to distinguish the elements. The terms used in the present specification are used to explain the embodiments and are not intended to limit the present invention in any way. The term "include" and its declensions as used in the present specification and/or the accompanying claims, clarify existence of the mentioned features, steps, operations, elements and/or components, but do not exclude existence or addition of one or more other features, steps, operations, elements, components and/or a group thereof. The term "and/or", when used, includes any one or more combinations of related listed elements. Unless otherwise specified, in the claims and the specification, "connect", "couple", "join", "link" or synonyms thereof and all declensions do not necessarily deny existence of one or more intermediate elements between two which are, for example, "connected", "coupled" or "linked" to each other. In the claims and the specification, unless otherwise specified, the term "any", when used, should be understood as a term representing the same meaning as a universal quantifier $\forall$. For example, expression of "concerning any X" has the same meaning as "concerning all X" or "concerning each X."

Unless otherwise noted, all the terms (including technical terms and scientific terms) used in the present specification have the same meaning as generally understood by a person skilled in the art in the field to which the present invention belongs. Further, the terms such as terms defined in dictionaries that are commonly used should be interpreted as having the same meaning as in the context of the related art and the present disclosure, and unless otherwise explicitly defined, should not be interpreted ideally or excessively formally.

It will be understood that many techniques and steps are disclosed in the description of the present invention. These respectively have individual advantages and can be used in combination with one or more or, in some cases, all of other disclosed techniques. Thus, to avoid complication, in the present specification, any possible combinations of the individual techniques and steps are not described. Nevertheless, the specification and the claims should be read and understood that such combinations are completely within the scope of the present invention and the claims.

Structures, materials, actions and equivalents corresponding to all functional elements coupled with means or steps in the following claims are intended to include, if any, structures, materials or actions for performing functions in combination with other elements.

Although embodiments of the present invention have been described above, the present invention is not limited to these embodiments. Various changes and modifications are allowed in a range not deviating from the gist of the present invention. The selected and described embodiments are provided to explain principles and actual applications of the present invention. The present invention is used as various embodiments along with various changes or modifications, and various changes or modifications are determined depending on the expected applications. All of such changes and modifications are intended to be included in the scope of the present invention defined by the accompanying claims and are intended to be protected in the same manner to the extent that they are fairly, legally and rightly interpreted.

[DESCRIPTION OF REFERENCE NUMERALS]

1: Tank
2: Interface sensor
3: Sensor block
5: Electrode pair
5a: Electrode
5b: Electrode
6: Electrode pair
7: Conducting line
7x: Branch line
7y: Branch line
9: Substrate
10: Reference line
11 to 17: Determination means
20: Water level output means
30: Sensor part
31: Electrode
40: Grounded conductor
50: Carrier wave generation circuit
61, 62: Resistor
70: Adjustment part
80: Switching means
81: Switch
90, 90': Discrimination means
100: Water level determination means
110: Control means
120: Switching means
121: Switch
130, 140: Charge circuit
150: A/D conversion part
160: Adjustment value storage part
200: Interface sensor
300: Sensor block
500a: First electrical conductor
500b: Second electrical conductor
700: Conducting line
700x: Branch line
800: Conducting line selector
900: Substrate

**Claims**

1. A level gauge comprising:

    a grounded conductor extending in a liquid level detection direction;
    a sensor part including a plurality of electrodes arranged in the liquid level detection direction and forming capacitance between the plurality of electrodes and the grounded conductor;
    an adjustment part;
    switching means;
    discrimination means; and
    liquid level determination means,
    wherein the plurality of electrodes are divided into n groups, the i-th (i=1, 2, ..., n) group is constituted with electrodes located at the $2^{i-1}(2k-1)$-th (k is a natural number from 1 to $2^{n-i}$) position from a lowermost position in the liquid level detection direction,
    the electrodes belonging to the same group among the plurality of electrodes are connected in parallel to each other and connected to the switching means,
    the discrimination means discriminates a larger and smaller relationship between capacitance of the i-th group and a total capacitance of a combination of groups from the (i+1)-th group to the n-th group for each of i=1, 2, ...,

n-1 and further discriminates a larger and smaller relationship between capacitance of the n-th group and capacitance of the adjustment part,

the switching means sequentially switches connection between the groups and the discrimination means so as to enable discrimination by the discrimination means, and

the liquid level determination means determines a liquid level based on the discrimination by the discrimination means.

2. The level gauge according to claim 1,
wherein the adjustment part functions so that two values of capacitance for which a larger and smaller relationship is to be discriminated by the discrimination means always become values different from each other.

3. The level gauge according to claim 2,
comprising a plurality of the adjustment parts, wherein the adjustment part to be caused to function is switched according to a group to which the discrimination means is connected.

4. The level gauge according to any of claims 1 to 3,
wherein the grounded conductor has a pipe shape surrounding a periphery of the sensor part.

5. The level gauge according to any of claims 1 to 3,
wherein an A/D conversion part is provided between the switching means and the discrimination means.

6. A sensor for locating a position of an interface between a first substance and a second substance, the sensor comprising a first electrical conductor, E second electrical conductors, L conducting lines, and a conducting line selector, where

[Formula 19]

$$E = \prod_{j=1}^{K} n(j) \ ,$$

$$L = \sum_{j=1}^{K} \Big( n(j) - 1 \Big) + 1 \ ,$$

K is a predetermined integer that satisfies $2 \leq K$, n(j) is a predetermined integer that satisfies $2 \leq n(j)$ for any $j \in \{x \in N: 1 \leq x \leq K\}$, and N is a set of all positive integers, wherein

the E second electrical conductors are placed in E planes in order according to an order relation of elements of a set $\{x \in N: 1 \leq x \leq E\}$, the E planes not coinciding with each other and being parallel to each other,

for any $p \in \{x \in N: 1 \leq x \leq E-1\}$, the p-th second electrical conductor among the E second electrical conductors is connected to the s(p)-th conducting line among the L conducting lines, where

[Formula 20]

$$s(p) = \left( p \Big/ \prod_{j=1}^{r} n(j-1) \right) \mathrm{mod}\, n(r) + \sum_{j=1}^{r} \Big( n(j-1) - 1 \Big) \ ,$$

n(0) = 1, $p \in W(r)$, a k-th set W(k) for any $k \in \{x \in N: 1 \leq x \leq K\}$ is given by

[Formula 21]

$$W(k) = \left\{ x \in N : 1 \le x \le E \ \wedge \ \left( \prod_{j=1}^{k} n(j-1) \right) \middle| x \right\} - \bigcup_{j=k}^{K} W(j+1) \ ,$$

and a (K+1)-th set W(K+1) is an empty set,
the E-th second electrical conductor among the E second electrical conductors is connected to the L-th conducting line among the L conducting lines, and
the conducting line selector is configured to select any one conducting line among the L conducting lines.

**7.** A sensor for locating a position of an interface between a first substance and a second substance, the sensor comprising a first electrical conductor, E second electrical conductors, L conducting lines, and a conducting line selector, where

[Formula 22]

$$E = \prod_{j=1}^{K} n(j) \ ,$$

$$L = \sum_{j=1}^{K} \left( n(j) - 1 \right) + 1 \ ,$$

K is a predetermined integer that satisfies $2 \le K$, n(j) is a predetermined integer that satisfies $2 \le n(j)$ for any $j \in \{x \in N: 1 \le x \le K\}$, and N is a set of all positive integers, wherein

the E second electrical conductors are placed in E planes in order according to an order relation of elements of a set $\{x \in N: 1 \le x \le E\}$, the E planes not coinciding with each other and being parallel to each other,
for any $p \in \{x \in N: 1 \le x \le E\text{-}1\}$, the p-th second electrical conductor among the E second electrical conductors is connected to the s(p)-th conducting line among the L conducting lines, where

[Formula 23]

$$s(p) = \left( p \middle/ \prod_{j=1}^{r} n(j-1) \right) \bmod n(r) + \sum_{j=1}^{r} \left( n(j-1) - 1 \right)$$

n(0) = 1, p ∈ W(r), a k-th set W(k) for any $k \in \{x \in N: 1 \le x \le K\}$ is given by

[Formula 24]

$$W(k) = \left\{ x \in N : 1 \le x \le E \ \wedge \ \left( \prod_{j=1}^{k} n(j-1) \right) \middle| x \right\} - \bigcup_{j=k}^{K} W(j+1) \ ,$$

and a (K+1)-th set W(K+1) is an empty set,
the E-th second electrical conductor among the E second electrical conductors is connected to the L-th conducting line among the L conducting lines,
for any $k \in \{x \in N: 1 \le x \le K\}$, the conducting line selector selects:

(1) in a case where k ≠ K and n(k) ≠ 2,

for any y ∈ {x ∈ N: 1 ≤ x ≤ n(k)-2}, two conducting lines determined by elements belonging to a set Y(y), among the L conducting lines, where

[Formula 25]

$$Y(y) = \bigcup_{z=y}^{y+1} \left\{ \sum_{j=1}^{k} \left( n(j-1)-1 \right) + z \right\},$$

for y = n(k)-1, $(2+\Sigma_{j=k+1}^{K}(n(j)-1))$ conducting lines determined by elements belonging to a set Y, among the L conducting lines, where

[Formula 26]

$$Y = \left\{ \sum_{j=1}^{k} \left( n(j-1)-1 \right) + y \right\} \bigcup_{m=k+1}^{K} \bigcup_{z=1}^{n(m)-1} \left\{ \sum_{j=1}^{m} \left( n(j-1)-1 \right) + z \right\} \bigcup \left\{ L \right\},$$

(2) in a case where k ≠ K and n(k) = 2,
$(2+\Sigma_{j=k+1}^{K}(n(j)-1))$ conducting lines determined by the elements belonging to a set Y, among the L conducting lines, where

[Formula 27]

$$Y = \left\{ \sum_{j=1}^{k+1} \left( n(j-1)-1 \right) \right\} \bigcup_{m=k+1}^{K} \bigcup_{z=1}^{n(m)-1} \left\{ \sum_{j=1}^{m} \left( n(j-1)-1 \right) + z \right\} \bigcup \left\{ L \right\},$$

and
(3) in a case where k = K,
for any y ∈ {x ∈ N: 1 ≤ x ≤ n(k)-1 }, two conducting lines determined by the elements belonging to a set Y(y), among the L conducting lines, where

[Formula 28]

$$Y(y) = \bigcup_{z=y}^{y+1} \left\{ \sum_{j=1}^{k} \left( n(j-1)-1 \right) + z \right\},$$

8. The sensor according to claim 6 or 7,
wherein for any j ∈ {x ∈ N: 1 ≤ x ≤ K}, the n(j) is a prime factor of the E.

9. The sensor according to any of claims 6 to 8,
wherein a distance between one second electrical conductor of any two second electrical conductors among the E second electrical conductors and the first electrical conductor is equal to a distance between the other second electrical conductor and the first electrical conductor.

10. A level gauge comprising:

the sensor according to any of claims 6 to 9, wherein
the first substance is a liquid, and
the second substance is a gas.

11. The level gauge according to claim 10,
    wherein a normal direction of the E planes corresponds to a vertical direction.

FIG. 1

FIG. 2

EP 4 528 234 A1

# FIG. 3

(a) $C_a > C_b$

| CARRIER WAVE | |
| WAVEFORM AT POINT a | s |
| BINARIZED WAVEFORM AT POINT a | |
| WAVEFORM AT POINT b | s |
| BINARIZED WAVEFORM AT POINT b | |
| WAVEFORM OF DISCRIMINATION PROCESSING | |

(b) $C_a < C_b$

| CARRIER WAVE | |
| WAVEFORM AT POINT a | s |
| BINARIZED WAVEFORM AT POINT a | |
| WAVEFORM AT POINT b | s |
| BINARIZED WAVEFORM AT POINT b | |
| WAVEFORM OF DISCRIMINATION PROCESSING | |

FIG. 4

START

M1
i=1

M2
TURN OFF
ALL SWITCHES

M3
TURN ON SWITCH
THAT CONNECTS
a AND $G_i$

M4
TURN ON SWITCH
THAT CONNECTS
b AND $G_{i+1}$, $G_{i+2}$, ..., $G_n$

M5
a>b?  — No

Yes

M6
$2^{i-1}$ BITS: 1

M7
$2^{i-1}$ BITS: 0

M8
i=i+1

M9
i=n?  — No

Yes

M10
TURN OFF
ALL SWITCHES

M11
TURN ON SWITCH
THAT CONNECTS
a AND $G_n$

M12
a>b?  — No

Yes

M13
$2^{n-1}$ BITS: 1

M14
$2^{n-1}$ BITS: 0

M15
OUTPUT WATER LEVEL

END

# FIG. 5

TABLE 1

|  | S1 | S2 | S3 | S4 | S5 | S6 | S7 |
|---|---|---|---|---|---|---|---|
| i = 1 DETERMINATION OF $2^0$ BITS | ON | OFF | ON | OFF | ON | OFF | ON |
| i = 2 DETERMINATION OF $2^1$ BITS | OFF | ON | OFF | OFF | ON | OFF | ON |
| i = 3 DETERMINATION OF $2^2$ BITS | OFF | OFF | OFF | ON | OFF | OFF | ON |
| i = 4 DETERMINATION OF $2^3$ BITS | OFF | OFF | OFF | OFF | OFF | ON | OFF |

FIG. 6

WATER LEVEL
DETECTION DIRECTION

EP 4 528 234 A1

START

M1
i=1

M2
TURN OFF
ALL SWITCHES

M3
TURN ON SWITCH
THAT CONNECTS
a AND $G_i$

M4
TURN ON SWITCH
THAT CONNECTS
b AND $G_{i+1}$, $G_{i+2}$, ..., $G_n$

M4'
TURN ON SWITCH
THAT CONNECTS
ADJUSTMENT PART

M5
a>b?
No
Yes

M6
$2^{i-1}$ BITS: 1

M7
$2^{i-1}$ BITS: 0

M8
i=i+1

M9
i=n?
No
Yes

M10
TURN OFF
ALL SWITCHES

A

A

M11
TURN ON SWITCH
THAT CONNECTS
a AND $G_n$

M11'
TURN ON SWITCH THAT
CONNECTS ADJUSTMENT PART
CORRESPONDING TO n AND b

M12
a>b?
No
Yes

M13
$2^{n-1}$ BITS: 1

M14
$2^{n-1}$ BITS: 0

M15
OUTPUT WATER LEVEL

END

FIG. 7

FIG. 8

TABLE 2

| | S1,S11 | S2,S12 | S3 | S4,S13 | S5 | S6,S14 | S7 |
|---|---|---|---|---|---|---|---|
| i = 1 DETERMINATION OF $2^0$ BITS | ON | OFF | ON | OFF | ON | OFF | ON |
| i = 2 DETERMINATION OF $2^1$ BITS | OFF | ON | OFF | OFF | ON | OFF | ON |
| i = 3 DETERMINATION OF $2^2$ BITS | OFF | OFF | OFF | ON | OFF | OFF | ON |
| i = 4 DETERMINATION OF $2^3$ BITS | OFF | OFF | OFF | OFF | OFF | ON | OFF |

FIG. 9

WATER LEVEL
DETECTION DIRECTION

# FIG. 10

(a)

(b)

EP 4 528 234 A1

# FIG. 11

TABLE 3

| | S1 | S2 | S3 | S4 | S5 | S6 | S7 |
|---|---|---|---|---|---|---|---|
| i = 1 DETERMINATION OF $2^0$ BITS | OFF/ON | OFF | OFF/ON | OFF | OFF/ON | OFF | OFF/ON |
| i = 2 DETERMINATION OF $2^1$ BITS | OFF | OFF/ON | OFF | OFF | OFF/ON | OFF | OFF/ON |
| i = 3 DETERMINATION OF $2^2$ BITS | OFF | OFF | OFF | OFF/ON | OFF | OFF | OFF/ON |
| i = 4 DETERMINATION OF $2^3$ BITS | OFF | OFF | OFF | OFF | OFF | OFF/ON | OFF |

| | S11 | S12 | S13 | S14 | S21 | S22 |
|---|---|---|---|---|---|---|
| i = 1 DETERMINATION OF $2^0$ BITS | ON/OFF | ON/OFF | ON/OFF | ON/OFF | ON/OFF | OFF/ON |
| i = 2 DETERMINATION OF $2^1$ BITS | OFF | ON/OFF | ON/OFF | ON/OFF | ON/OFF | OFF/ON |
| i = 3 DETERMINATION OF $2^2$ BITS | OFF | OFF | ON/OFF | ON/OFF | ON/OFF | OFF/ON |
| i = 4 DETERMINATION OF $2^3$ BITS | OFF | OFF | OFF | ON/OFF | ON/OFF | OFF/ON |

NOTE) OFF/ON AND ON/OFF IN ABOVE TABLE ARE OPPOSITE PHASES

EP 4 528 234 A1

FIG. 12

# FIG. 13

EP 4 528 234 A1

TABLE 4

|  | S1 | S2 | S3 | S4 | S5 | S6 | S7 |
|---|---|---|---|---|---|---|---|
| i = 1 DETERMINATION OF $2^0$ BITS | OFF/ON | OFF | OFF/ON | OFF | OFF/ON | OFF | OFF/ON |
| i = 2 DETERMINATION OF $2^1$ BITS | OFF | OFF/ON | OFF | OFF | OFF/ON | OFF | OFF/ON |
| i = 3 DETERMINATION OF $2^2$ BITS | OFF | OFF | OFF | OFF/ON | OFF | OFF | OFF/ON |
| i = 4 DETERMINATION OF $2^3$ BITS | OFF | OFF | OFF | OFF | OFF | OFF/ON | OFF |

|  | S11 | S12 | S13 | S14 | S15 | S16 | S17 | S21 | S22 |
|---|---|---|---|---|---|---|---|---|---|
| i = 1 DETERMINATION OF $2^0$ BITS | ON/OFF | OFF | OFF | OFF | ON/OFF | ON/OFF | ON/OFF | ON/OFF | OFF/ON |
| i = 2 DETERMINATION OF $2^1$ BITS | OFF | ON/OFF | OFF | OFF | OFF | ON/OFF | ON/OFF | ON/OFF | OFF/ON |
| i = 3 DETERMINATION OF $2^2$ BITS | OFF | OFF | ON/OFF | OFF | OFF | OFF | ON/OFF | ON/OFF | OFF/ON |
| i = 4 DETERMINATION OF $2^3$ BITS | OFF | OFF | OFF | ON/OFF | OFF | OFF | OFF | ON/OFF | OFF/ON |

NOTE) OFF/ON AND ON/OFF IN ABOVE TABLE ARE OPPOSITE PHASES

OFF/ON

ON
OFF

ON/OFF

ON
OFF

FIG. 14

WATER LEVEL DETECTION DIRECTION

EP 4 528 234 A1

# FIG. 15

k=K=3
M(3)=2
n(3)=2

k=2
M(2)=10
n(2)=5

k=1
M(1)=30
n(1)=3

FIRST DIRECTION

P(30)
P(27)
P(24)
P(21)
P(18)
P(15)
P(12)
P(9)
P(6)
P(3)
P(1)

7
7(2nd)
$5b(m_k=2)$
$5b(m_k=9)$
$5b(m_k=24)$
7x
7(1st)
$5b(m_k=18)$
7x
7(5th)
7(4th)
7(3rd)
$5b(m_k=1)$
7(2nd)
7(1st)
$5b(m_k=1)$

3

7(1st)
7(2nd) 7(3rd)

2
5a
9

SECOND DIRECTION

# FIG. 16

# FIG. 17

**INTERNATIONAL SEARCH REPORT**

| International application No. |
| --- |
| **PCT/JP2023/022431** |

**A. CLASSIFICATION OF SUBJECT MATTER**

*G01F 23/263*(2022.01)i
FI: G01F23/263

According to International Patent Classification (IPC) or to both national classification and IPC

**B. FIELDS SEARCHED**

Minimum documentation searched (classification system followed by classification symbols)

G01F23/00-23/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 3552209 A (JOHNSTON, James Stewart) 05 January 1971 (1971-01-05)<br>entire text, all drawings | 1-11 |
| A | JP 57-064115 A (NIPPON GENSHIRYOKU KENKYUSHO) 19 April 1982 (1982-04-19)<br>entire text, all drawings | 1-11 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 June 2023** | **11 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/022431**

| Patent document cited in search report | | | Publication date (day/month/year) | Patent family member(s) | | | Publication date (day/month/year) |
|---|---|---|---|---|---|---|---|
| US | 3552209 | A | 05 January 1971 | (Family: none) | | | |
| JP | 57-064115 | A | 19 April 1982 | US | 4423629 | A | |
| | | | | entire text, all drawings | | | |

Form PCT/ISA/210 (patent family annex) (January 2015)

**REFERENCES CITED IN THE DESCRIPTION**

**Patent documents cited in the description**

- JP H11311562 A